# EUROPEAN PATENT APPLICATION

(11) **EP 1 345 387 A2**
(43) Date of publication of application: **17.09.2003**
(21) Application number: 02257618.5
(22) Date of filing: 04.11.2002
(51) Int. Cl.: H04L 29/08

(54) **Graphical User Interface for displaying network environment, task, and user information**

(30) Priority: 11.03.2002 JP 2002065119
(71) Applicant: FUJITSU LIMITED, Kawasaki-shi, Kanagawa 211-8588 (JP); Optima inc., Tokyo 106-0031 (JP); Digital Creation Inc., Osaka-City 541-0045 (JP)
(72) Inventor: Nishiyama, Soichi, Nakahara-ku, Kawasaki, Kanagawa 211-8588 (JP); Okude, Naohito, c/o Optima Inc., Tokyo 106-0031 (JP); Takahashi, Toshiya, c/o Digital Creation Inc., Osaka-City 541-0045 (JP)
(74) Representative: Hitching, Peter Matthew

(57) **Abstract**

A program of the invention causes a computer to display information relating to a service provided by another computer and information concerning a communication state in a display frame upper portion on a display screen, to display processing content of a task associated with the service provided by another computer in a display frame middle portion, and to display an icon for expressing information intrinsic to a user in a display frame lower portion, including a processing result of the task. As stated above, the network information is displayed in the display frame upper portion, the processing content of the task is displayed in the display frame middle portion, and the processing result of the task is displayed in the display frame lower portion, so that the network environment is intuitively shown to the user, and the icon for expressing the information intrinsic to the user is shown in the display frame lower portion. Accordingly, it becomes easy for the user to grasp objective data using this GUI (Graphical User Interface).

## Description

The present invention relates to a user interface.

Alto of Zerox Corp. appearing on the stage early in the 1970's realized both a GUI (Graphical User Interface) and an object-orientated development environment at the same time. The Alto was a first computer which definitely linked the GUI with the object orientation. However, an expression method in this computer is a GUI for realizing status grasp and operation with respect to the inside of a computer or computers connected through a network.

On the other hand, in the Internet widely used at present, it is possible to cause a program (application) in a server connected through the network to perform a processing via a computer, or to carry out communication with a partner (partner computer) through the network. The network environment like this can not be expressed by a simple GUI and an object-oriented expression method.

Besides, in a widely used Web browser at present, since all information presentation basic structures are constructed by operations and information presentations in page units, its expression method is not such that a human behavioral model and mental model is taken into consideration. Similarly, although a program for an instant message, a mailer or the like is widely used as communication means through the network, its expression method is limited to a simple one, and it can be hardly said that the program or mailer satisfies the human behavioral model and mental model at the time when the network environment is used in a comprehensively way.

As described above, in the background art, although the usability of a computer is improved by the use of icons, the usability of a computer in the network environment is not changed, and it does not indicate that a communication state with another computer connected to the network, processing content of a task, and a processing result of the task can be visually and easily recognized and understood. Especially in the case where the processing result of the task is stored in another computer connected to the network, in order to acquire the processing result of the task, a predetermined path is traced from a top menu of another computer, and the result is obtained at last. However, this neglects the human behavioral model and mental model. Moreover, also with respect to very important items in the use of the network, such as security and/or privacy, it can be hardly said that a user interface in which the network environment is considered in a comprehensive way is provided.

It is therefore desirable to provide a user interface in which a network environment is considered in a comprehensive way and a human behavioral model and mental model are reflected.

According to an embodiment of a first aspect of the invention, a program for carrying out communication with another computer connected to a network is provided for causing a computer to display at least either of information (for example, service menu, etc.) concerning a service provided by another computer and information (for example, encrypted communication or not) concerning a state of communication with another computer in a first display frame (for example, a window or a predetermined area of the window) on a display screen of the computer; to display at least processing content of a task associated with the service provided by another computer in a second display frame; and to display at least an icon for expressing information intrinsic to a user in a third display frame, wherein the information intrinsic to the user includes a processing result of the task associated with the service provided by another computer.

As stated above, the information concerning the computer different from the user's computer and/or the network is displayed in the first display frame (for example, an upper part in an embodiment), the processing content of the task to be executed is displayed in the second display frame (for example, a middle part in the embodiment), and the processing result of the task and the personal information are displayed in the third display frame (for example, a lower part in the embodiment), whereby a network environment can be intuitively shown to the user. Besides, by showing the icon for expressing the information intrinsic to the user in the third display frame, since an object of consciousness (for example, a result of shopping, information of a credit card) is brought into such a state that it is put at hand, instructions can be given in a manner closer to the human behavioral model and mental model.

Incidentally, a first display frame displaying function for displaying in the first display frame as described above, a second display frame displaying function for displaying in the second display frame, and a third display frame displaying function for displaying in the third display frame may be realized in a comprehensive way by a program according to an embodiment of the first aspect of the invention, or each of program modules realizes one of these functions or a part of these functions.

Besides, there is a case where a region for displaying the information concerning the communication state and/or a region for displaying the information relating to the service provided by another computer are defined in the display frame.

Besides, in an embodiment of the first aspect of the invention, there is a case where the program causes the computer to further realize a function of carrying out a processing associated with security in the communication with another computer when a state under communication with another computer is displayed as the information concerning the communication state. For example, a processing such as SSL (Secure Socket Layer) or virus check is carried out. A display for requesting permission of the communication from a user and a corresponding operation by the user may be carried out during execution of the processing associated with the security or before that.

Besides, the second display frame displaying function may be configured so as to cause the computer to display an icon for expressing the task associated with the service provided by another computer in the second display frame. By this, it becomes easy to cause the task under execution at present or executable (for example, resident task) to be recognized. Incidentally, in the case of the icon for expressing the task under execution at present, a highlighting display such as blinking may be carried out. There is also a case where a region for the icon for expressing such task is defined in the display frame.

Besides, in an embodiment of the first aspect of the invention, it is also possible to cause the computer to further realize a function of carrying out a processing associated with privacy confirmation with respect to the information intrinsic to the user (for example, usage confirmation of cookie, or usage confirmation of user personal information including a credit card number etc.), and/or policy confirmation for the user or between the user and a third party (for example, usage confirmation in accordance with a handling guideline of the user intrinsic information intrinsically determined by the user, and/or usage confirmation in accordance with a delivery policy of the user intrinsic information determined between the user and a third party such as a family) when the information intrinsic to the user is used or registered. Further, the third display frame displaying function may be constructed so as to cause the computer to display an icon for expressing the function of carrying out the processing associated with the policy confirmation. By disposing the icon concerning the policy check of the information intrinsic to the user, it is possible to recognize that when the information intrinsic to the user is used, the policy check is carried out.

Further, the third display frame displaying function may be constructed so as to cause to display an icon for expressing the function of carrying out the processing associated with at least either of the privacy confirmation and the policy confirmation. By disposing the icon concerning the privacy check or the policy check in the third display frame in which the display for managing the information intrinsic to the user is carried out, it is possible to recognize that when the information intrinsic to the user is used, the privacy check or the policy check is carried out.

Further, the second display frame displaying function may cause the computer to display data associated with the task in the second display frame after a display expressing a passage through the icon for expressing the task is carried out in a case where the data associated with the task is received from another computer, and cause the computer to carry out a display expressing a transmission through the icon for expressing the task in a case where the data associated with the task is transmitted to another computer. By carrying out the display as stated above, it becomes possible to intuitively understand the relation between the task and the communication.

Besides, the third display frame displaying function may cause the computer to carry out a display expressing a passage via the icon for expressing the function of carrying out the processing associated with at least either of the privacy confirmation and the policy confirmation when a processing result of a task is registered. If doing so, it is possible to intuitively understand that the processing result of the task is registered after the privacy check or the policy check is carried out. Incidentally, at the privacy check or the policy check, it may be inquired to a user whether or not the registration is to be carried out.

Further, a processing result of a task associated with the service provided by another computer may be stored in a storage device correspondingly to an icon for expressing the processing result of the task, and it may be constructed to cause the computer to further realize a task activation function to read out the processing result of the task, which is stored in the storage device, according to a selection instruction of the icon for expressing the processing result of the task, and to perform a processing for activating a task associated with the processing result of the task. By such a configuration as is stated above, the confirmation and operation can be made by selecting the processing result of the task without acquiring the processing result of the task by taking the trouble to trace the menus of the service providing server, so that it becomes possible to provide an interface along the human behavioral model and mental model and having higher usability.

Besides, the third display frame displaying function may be constructed so as to cause the computer to carry out a display that an output is made via an icon for expressing the function of carrying out the processing associated with at least either of the privacy confirmation to the information intrinsic to the user and the policy confirmation of the user or between the user and the third party, in response to the selection instruction of the icon for expressing the processing result of the task. By this, it becomes possible to intuitively understand such a processing system that output is made after the privacy check or the policy check.

Further, the first display frame displaying function may be constructed such that in a case where the information concerning the service provided by another computer and the information indicating the communication state are displayed, and a specific service included in the information concerning the service is selected, it causes to display so that a request is made via a portion where the information indicating the communication state is displayed. The provided service is also based on the data from another computer, and the output of the request for the provided service can be visually made clear.

A program according to an embodiment of a second aspect of the invention is provided that causes a computer to realize a first display frame displaying function for displaying at least processing content of a task associated with a service provided by another computer in a first display frame on a display screen of the computer; and a second display frame displaying function for displaying at least an icon for expressing information intrinsic to a user, including a processing result of the task associated with the service provided by another computer, in a second display frame.

Although, in an embodiment of the first aspect of the invention, the information concerning the computer different from the user's computer and/or concerning the network is displayed in the first display frame, such information, together with other menus, may be displayed in a different display frame, and in that case, the configuration described above is adopted.

An information processing method executed in a server according to an embodiment of a third aspect of the invention is provided that comprises the steps of: transmitting information concerning a provided service to a user terminal in response to an access from the user terminal; transmitting information for task execution and information for an icon for expressing the task to the user terminal in response to a task activation request associated with the provided service from the user terminal; and transmitting information concerning a processing result of the task and information of an icon for expressing the processing result of the task to the user terminal in response to processing completion of the task in the user terminal.

By doing so, the user terminal can carry out a display in a manner along the human behavioral model and mental model, and the usability of the computer in the network environment is improved.

Incidentally, the aforementioned program or the program for causing the computer to execute the aforementioned method may be stored in a storage medium or a storage device such as, for example, a flexible disk, a CD-ROM, a magneto-optical disk, a semiconductor memory, or a hard disk. Besides, the program may be distributed through a network or the like. It will therefore be appreciated that a computer program embodying the present invention need not be stored on a computer-readable medium and could, for example, be embodied in a signal such as a downloadable data signal provided from an Internet website. The appended claims are to be interpreted as covering a computer program by itself, or as a record on a carrier, or as a signal, or in any other form. Incidentally, an intermediate processing result is temporarily stored in a memory.

Reference will now be made, by way of example, to the accompanying drawings, in which:
Fig. 1 is a schematic drawing of a display screen definition in an embodiment of the invention;
Fig. 2 is a system schematic drawing in the embodiment of the invention;
Fig. 3 is a drawing showing an example of data stored in a public menu DB;
Fig. 4 is a drawing showing an example of data stored in a task list;
Fig. 5 is a drawing showing an example of data stored in a personal profile and presence DB;
Fig. 6 is a drawing showing an example of data as an origin of a task list stored in a public service DB;
Fig. 7 is a drawing showing an example of data stored in a task icon table;
Fig. 8 is a drawing showing an example of data stored in a profile icon table;
Fig. 9 is a drawing showing a first portion of a processing flow in shopping;
Fig. 10 is a drawing showing a screen structural example in shopping;
Fig. 11 is a schematic drawing showing an example of an expression mode of data movement;
Fig. 12 is a schematic drawing showing an example of an expression mode of data movement;
Fig. 13 is a drawing showing an example of a task list;
Fig. 14 is a drawing showing a portion of a task icon URL table;
Fig. 15 is a drawing showing a second portion of a processing flow in shopping;
Fig. 16 is a schematic drawing showing an example of an expression mode of data movement;
Fig. 17 is a drawing showing a first screen example in shopping;
Fig. 18 is a schematic drawing showing an example of an expression mode of data movement;
Fig. 19 is a drawing showing a second screen example in shopping;
Fig. 20 is a drawing showing a third processing flow in shopping;
Fig. 21 is a drawing showing a third screen example in shopping;
Fig. 22 is a drawing showing a fourth processing flow in shopping;
Fig. 23 is a drawing showing a portion of a profile icon URL table:
Fig. 24 is a drawing showing an example of profile data in the case of shopping;
Fig. 25 is a schematic drawing showing an example of an expression mode of data movement;
Fig. 26 is a drawing showing a second processing flow in shopping;
Fig. 27 is a schematic drawing showing an example of an expression mode of data movement;
Fig. 28 is a drawing showing a processing flow for displaying a shopping history;
Fig. 29 is a drawing showing a screen example of the shopping history;
Fig. 30 is a drawing showing a first portion of a processing flow for carrying out a display of a maintenance map;
Fig. 31 is a drawing showing a second screen example of the shopping history;
Fig. 32 is a drawing showing a second portion of a processing flow for carrying out a display of a maintenance map;
Fig. 33 is a drawing showing an example of profile data concerning a maintenance map;
Fig. 34 is a drawing showing an example of a screen for selecting a reception place for commodity maintenance;
Fig. 35 is a drawing showing a third portion of a processing flow for carrying out a display of the maintenance map;
Fig. 36 is a drawing showing a screen example of the maintenance map ;
Fig. 37 is a drawing showing a first portion of a processing flow of mail reception; and
Fig. 38 is a drawing showing a second portion of a processing flow of the mail reception.

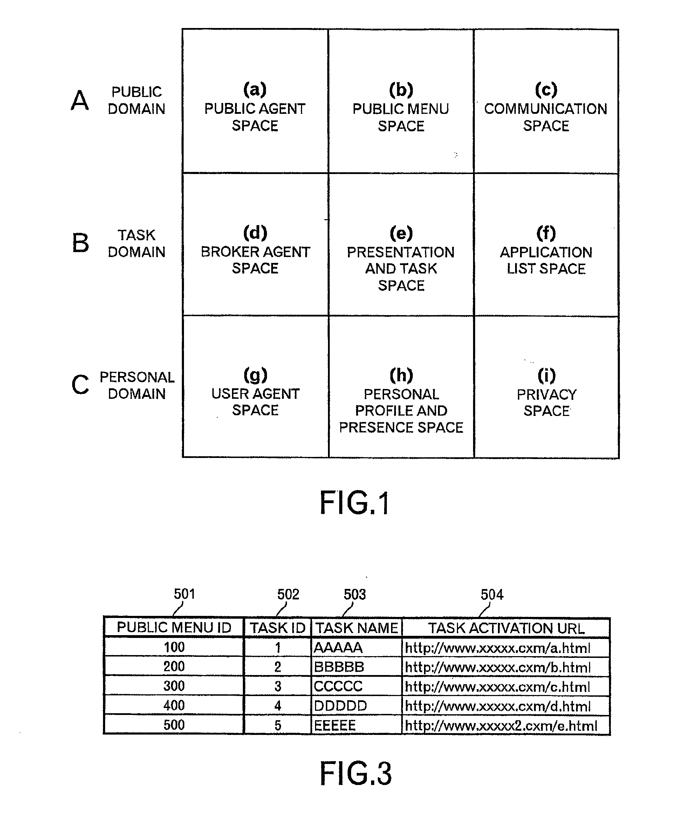

Fig. 1 shows a display screen structural example in an embodiment of the invention. A window on a display screen or the display screen itself, which is displayed by a program of this embodiment executed in a computer of a user, is divided into an upper public domain A, a middle task domain B, and a lower personal domain C. The public domain A is further divided into a public agent space (a), a public menu space (b), and a communication space (c) . The task domain B is further divided into a broker agent space (d), a presentation and task space (e), and an application list space (f). The personal domain C is further divided into a user agent space (g), a personal profile and presence space (h), and a privacy space (i).

The public domain A is a region for presenting information at the side of a network, such as information concerning a communication state with the network to which a user's computer is connected, information concerning a service provided by another computer connected to the network, or information associated with an agent provided from another computer connected to the network. The public agent space (a) is a region for displaying the information associated with the agent provided from another computer connected to the network. The public menu space (b) is a region for presenting the information concerning the services provided from another computer connected to the network, for example, a service menu. For example, in the case of an electronic administration service, a menu such as "Do-it-now section", "Living guide", "Event", "Administration window", or "Administration facilities" is displayed. In shopping, a menu such as "Commodity retrieval", "Commodity purchase", "Reservation", or "Inquiry" is displayed. The communication space (c) is a region for displaying information associated with communication with the network connected to the user terminal or another computer connected to the network, such as an icon and/or animation for expressing a communication state and/or a communication function. For example, during communication, the icon for expressing the communication state is blinked or the animation for expressing the communication state is displayed. In the case of encrypted communication, there are some cases where its state is emphasized and displayed.

The task domain B is a region for presenting, for example, information associated with a broker agent which negotiates with a public agent instead of a user or a user agent, processing content of a task associated with the service provided by another computer connected to the network, and icons associated with the task (also called application), icons associated with a resident task, and/or its list. The broker agent space (d) is a region for presenting the information associated with the broker agent for negotiating with the public agent instead of the user or the user agent. The presentation and task space (e) is a region for presenting the processing content of the task to be executed and a main display region of the content in the middle of the processing and the result of the processing. The application list space (f) is a region for displaying the list of tasks relating to the user, such as an icon of a task, the processing content of which is under display at present, and/or an icon of a resident task. For example, the icon of the task under execution is blinked, or an animation is displayed. The resident task includes, for example, a mail (for example, a Web mail), a calendar function, and a map function.

The personal domain C is a region for displaying information intrinsic to the user and information associated therewith, such as a result of a dialog with the broker agent or a message to the user, an icon for expressing personal information of the user or a processing result (for example, log or cookie information) of a task executed, and an icon for expressing a module for carrying out a privacy check and a policy check. The user agent space (g) is a region for displaying the result of the dialog with the broker agent and/or the message to the user. The personal profile and presence space (h) is a region for displaying the icons for expressing the personal information of the user and/or the processing result of the task executed. The privacy space (i) is a region for displaying an icon of a module which operates as a gate between the personal domain C and the task domain B, such as the icon for expressing the module for carrying out the privacy check and the policy check.

In Fig. 1, a group of the regions associated with the agents are arranged in the left column, a group of the regions associated with the tasks are arranged in the middle column, and a group of the regions of the icons associated with the functions of the communication, the task, the privacy and the like are arranged in the right column.

As shown in Fig. 1, the information associated with the communication with the network and another computer is presented on the upper part of the screen or the window, the information associated with the tasks to be executed is presented on the middle of the screen or the window, and the information intrinsic to the user and the information associated therewith are presented on the lower part of the screen or the window, so that the user can intuitively understand the network environment. Besides, since the service provided through the network, the actual task, and the processing result of the task can be presented in a visual form, it becomes easy to grasp the flow of the information in the network environment. Especially, in the conventional Web technique, the public domain A and the task domain B are not conceptually separated, or the personal domain C does not exist, and therefore, only the information of the present task is provided to the user in many cases. In such a state, the network environment including the relation among a machine, a human being, and a network can not be intuitively understood, and it is impossible to provide a feeling of operation along the human behavioral model and mental model. In this embodiment, a conventionally performed information design and an interactive design based on user experience search are blended into one to newly define the relation between the machine and the human being, or among the machine, the human being and the network, so that the display screen as shown in Fig. 1 is constructed, the conventional problem described above is solved, and the interface having higher usability can be provided.

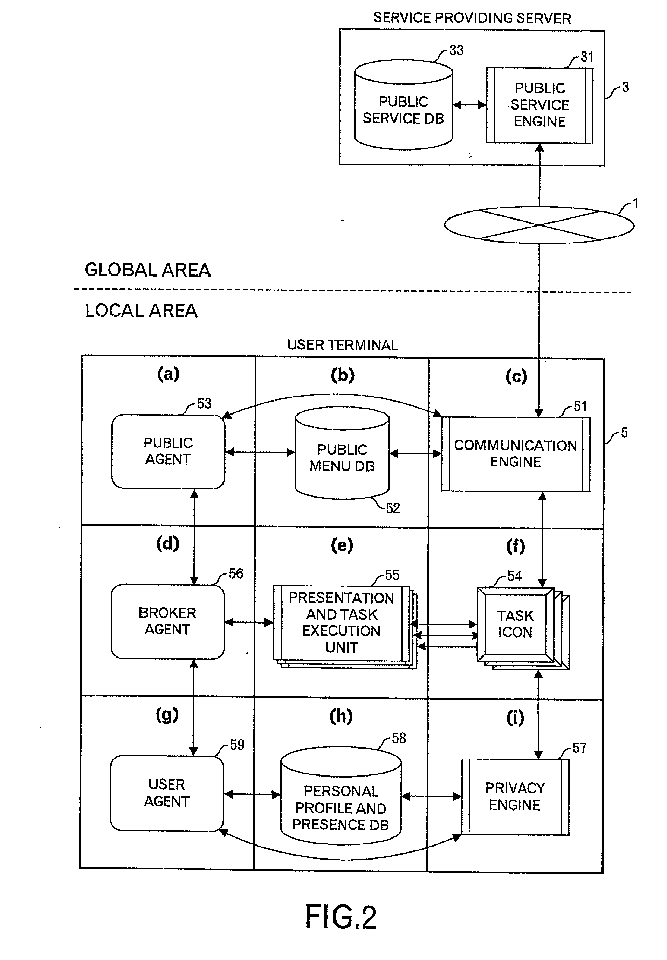

Hereinafter, a description will be given for a system configuration and a processing flow in the case where the display screen of Fig. 1 is provided and used, and specific screen structural examples. Fig. 2 shows a system configuration example. A network 1, for example, the Internet is connected with a service providing server 3 and a user terminal 5. The service providing server 3 includes a public service engine 31. Besides, the service providing server 3 manages a public service DB 33 for storing data used by the public service engine 31. The user terminal 5 is, for example, a personal computer, and objects corresponding to the respective display regions explained in Fig. 1 are provided or generated therein. A public agent 53 is provided from the public service engine 31 of the service providing server 3 correspondingly to the public agent space (a). A public menu DB 52 is provided from the public service engine 31 correspondingly to the public menu space (b). A communication engine 51 is prepared correspondingly to the communication space (c). A broker agent 56 is prepared correspondingly to the broker agent space (d). There are some cases where the broker agent 56 is generated from a user agent 59. A presentation and task execution unit 55 is provided from the public service engine 31 correspondingly to the presentation and task space (e) . A task icon 54 is provided from the public service engine 31 correspondingly to the application list space (f). Incidentally, there are some cases where an icon of a resident task is previously prepared. The user agent 59 is prepared correspondingly to the user agent space (g). A personal profile and presence DB 58 is prepared correspondingly to the personal profile and presence space (h) . Besides, a privacy engine 57 is prepared correspondingly to the privacy space (i).

The user terminal 5 is installed in a local area for the user, and the network 1 and another computer connected thereto are installed in a global area.

The communication engine 51 cooperates with the network 1 and the public service engine 31 of the service providing server 3 connected through the network 1. At this time, the service providing server 3 may be a user terminal of a third party. Besides, it also cooperates with the public agent 53, the public menu DB 52, and the task icon 54. The public menu DB 52 cooperates with the communication engine 51 and the public agent 53. The public agent 53 cooperates with the public menu DB 52, the communication engine 51, and the broker agent 56. The task icon 54 cooperates with the communication engine 51, the privacy engine 57, and the presentation and task execution unit 55. The presentation and task execution unit 55 cooperates with the task icon 54 and the broker agent 56. The broker agent 56 cooperates with the public agent 53, the presentation and task execution unit 55, and the user agent 59. The privacy engine 57 cooperates with the task icon 54, the personal profile and presence DB 58, and the user agent 59. The personal profile and presence DB 58 cooperates with the privacy engine 57 and the user agent 59. The user agent 59 cooperates with the personal profile and presence DB 58, the privacy engine 57, and the broker agent 56.

The public agent 53 is an agent at the side of a service provider, and mediates between the broker agent 56 and the public service DB 33. The public agent 53 is not indispensable, and there are some cases where it does not exist. The public agent 53 outputs information concerning a service menu provided by itself to the broker agent 56. From the broker agent 56, it receives a service request of a service selected by the broker agent 56. Besides, the public agent 53 outputs a task activation command corresponding to the service request from the broker agent 56 to the public menu DB 52. Besides, it receives data of a task menu or a service menu from the public menu DB 52, and a notice of execution of the task activation command and etc. In the case where it is necessary to acquire information not included in the public menu DB 52, it outputs a service request for the service providing server 3 (especially the public service DB 33) to the communication engine 51. If necessary, the communication engine 51 performs a security check, accesses the service providing server 3 through the network 1, and acquires the requested information. The information acquired by the communication engine 51 from the service providing server 3 is outputted to the public agent 53.

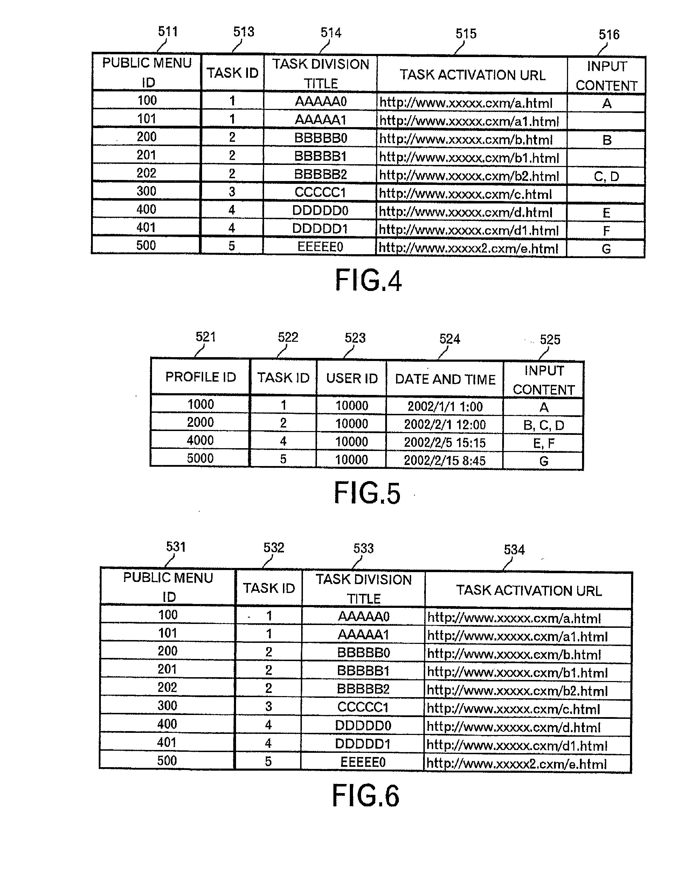

The public menu DB 52 is a menu list stored in the public service DB 33, and is acquired by the communication engine 51 through the network 1 from the public service engine 31. Incidentally, an activation command of a task associated with a service selected by the user is outputted to the public service engine 31 of the service providing server 3 through the communication engine 51 and the network 1. Fig. 3 shows an example of data stored in the public menu DB 52. The example of Fig. 3 includes a column 501 of a public menu ID, a column 502 of a task ID, a column 503 of a task name, and a column 504 of a task activation URL (Uniform Resource Locator). The information included in the column of the task name is displayed in the public menu space (b) horizontally or vertically. When selected by the user, a task activation command is transmitted to the task activation URL corresponding to the task name through the communication engine 51.

The communication engine 51 is a module for managing network communication between the local area and the global area. A setting concerning communication can be made for each object cooperating with the communication engine 51 or for each communication. It is possible to provide such function that for example, communication other than the setting is not permitted, or a notification is given in the case where communication according to the setting (for example, encrypted communication) is performed. The communication engine 51 supports also the communication of instant messages, mail transmission and reception, and the like in addition to the Internet connection, and also displays the connection state (existence of connection, etc.). Besides, there are some cases where it carries out encryption (SSL etc.) of communication and/or security check of a connection destination, and/or requests inputs of information for an authentication processing. Besides, it may be made to support communication regulated in UDDI (Universal Description, Discovery and Integration: see http://www.uddi.org for details), Rosetta net, or Hailstorm. As the cooperation with the task icon 54 (an object of task icon 54), the communication engine 51 receives the information of the task associated with the task icon 54 from the task icon 54 and transmits it to the service providing server 3, and requests the information of the task to the service providing server 3. Besides, it receives the information of the task from the service providing server 3 and outputs it to the task icon 54.

The broker agent 56 is an agent for mediating between the public agent 53 and the user agent 59. The broker agent 56 is also not indispensable, and there are some cases where it does not exist. There are some cases where the broker agent 56 is operated in accordance with the input by the user, or is operated in accordance with the user agent 59 or the public agent 53. The broker agent 56 displays the processing or operation content of the broker agent 56, outputs it to the presentation and task execution unit 55 and causes it to be displayed, outputs the input content of the presentation and task execution unit 55 to the personal profile and presence DB 58 through, for example, the user agent 59, and/or outputs it to the public agent 53. Besides, it outputs the information acquired from the public service DB 33 and the information of the presentation and task execution unit 55 to the user agent 59, and/or receives data from the user agent 59, which is stored in the personal profile and presence DB 58 and is permitted to be outputted by the user agent 59 or the privacy engine 57.

The presentation and task execution unit 55 visualizes the task associated with the service provided by the public service engine 31 of the service providing server 3. Task switching can be performed through the task icon 54 in multitasking. The presentation and task execution unit 55 outputs the information and the like inputted during the task execution to the object of the task icon 54 in order to output it to, for example, the personal profile and presence DB 58 or the public service DB 33. Besides, the information of the task corresponding to the task icon 54 is outputted from the object of the task icon 54. Besides, the information of the task used in the presentation and task execution unit 55 includes a task list as shown in Fig. 4, for example. The task list is received from the service providing server 3, and is held in, for example, the presentation and task execution unit 55 or the object of the task icon 54. By this, the sequence of tasks to be executed is defined.

The example of Fig. 4 includes a column 511 of a public menu ID, a column 513 of a task ID, a column 514 of a task division title, a column 515 of a task activation URL, and a column 516 of input content. A task is identified by the task ID, and a step of each task is identified by the task division title and the corresponding task activation URL. Incidentally, the input content includes information concerning the content of the input requested of the user.

The object of the task icon 54 corresponds to the presentation and task execution unit 55, manages the task to be executed, and carries out the task switching. Besides, there are some cases where the information inputted by the user and the like at the presentation and task execution unit 55 is outputted to the privacy engine 57 in order to store it in the personal profile and presence DB 58. Besides, when a task is activated from the data stored in the personal profile and presence DB 58 and the task ID (or task activation URL) by, for example, user's designation, and the task is executed on the basis of the stored data, the task icon 54 is displayed.

When the data stored in the personal profile and presence DB 58 is outputted to the broker agent 56, the user agent 59 carries out a processing for privacy and policy management, and/or causes a task to be automatically executed on the basis of the setting by the user. The user agent 59 is also not indispensable, and there are some cases where it does not exist. Besides, it outputs the data from the broker agent 56 to the personal profile and presence DB 58, or outputs the data stored in the personal profile and presence DB 58 to the broker agent 56. Further, the user agent outputs the data stored in the personal profile and presence DB 58 to the broker agent 56 in accordance with the result of the privacy check or policy check in the privacy engine 57, and/or stores the data received from the broker agent 56 into the personal profile and presence DB 58 in accordance with the result of the privacy check or policy check in the privacy engine 57.

The personal profile and presence DB 58 stores the data inputted and generated at the presentation and task execution unit 55. For each data set of the task, an icon display is carried out in the personal profile and presence space (h). Besides, the task can also be activated using the data of the task stored in the personal profile and presence DB 58 from the icon. Incidentally, in the personal profile and presence DB 58, not only the data associated with the task, but also the user's personal information (in addition to address, name, and credit card number, user ID and password for each service, etc.) is registered. In the case where the data is registered in the personal profile and presence DB 58, and/or the task is activated from the data of the task stored in the personal profile and presence DB 58, the processing is carried out mainly via the privacy engine 57.

Fig. 5 shows an example of the data stored in the personal profile and presence DB 58. The example of Fig. 5 includes a column 521 of a profile ID, a column 522 of a task ID, a column 523 of a user ID, a column 524 of a registered date and time, and a column 525 of input content. The input content is not limited to content inputted by the user, and for example, there are some cases where it is a processing result of a task. Besides, the input content may be separately stored.

The privacy engine 57 carries out a setting of privacy and a privacy check in accordance with the privacy setting. Besides, it carries out a setting of policy (policy along which personal information is owned personally or shared by a third party, or input/output is permitted) and a policy check in accordance with the policy setting. Besides, there are some cases where management of a user ID and a password is carried out, and/or authentication with an IC card or biometric authentication is carried out. The privacy is set or instructed in such a manner that for example, a name, an address and a mail address are not revealed to an obscure service, or in the case where an address is required once more in a service in which the address was once revealed, it is outputted without confirmation. Alternatively, there is a setting in which the privacy is set such that new disclosed contents are confirmed one by one. The privacy check is carried out also in response to a request from the user agent 59.

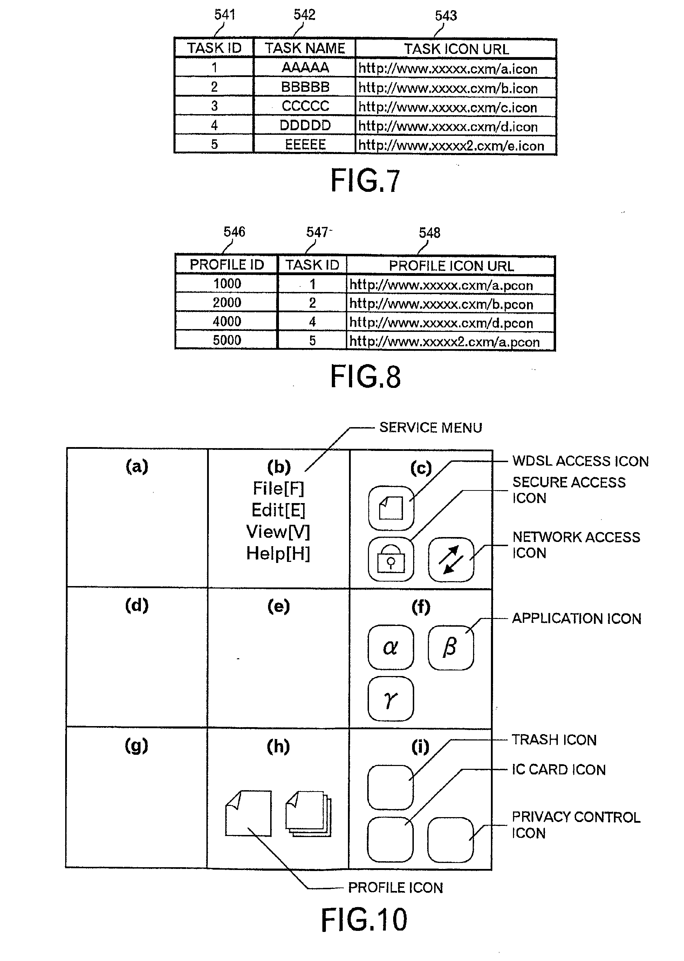

Many service providing servers 3 are connected on the network 1, and various services are provided. The public service engine 31 transmits data stored in the public service DB 33 to the user terminal 5 of a requester in response to a request. The public service DB 33 stores information of tasks associated with the provided services, and stores, for example, data as shown in Fig. 6 to 8. Fig. 6 shows an example of data as an original of the task list used in the presentation and task execution unit 55, and the example of Fig. 6 includes a column 531 of a public menu ID, a column 532 of a task ID, a column 533 of a task division title, and a column 534 of a task activation URL 534. Fig. 7 shows a task icon table for storing information to display the task icon 54 of a task to be executed in the application list space (f), and the example of Fig. 7 includes a column 541 of a task ID, a column 542 of a task name, and a column 543 of a task icon URL. At the time of execution of a task, data of the task icon 54 is transmitted to the user terminal 5 from the task icon URL. Fig. 8 shows a profile icon table for profile data, such as processing results of tasks, displayed in the personal profile and presence space (h). The example of Fig. 8 includes a column 546 of a profile ID, a column 547 of a task ID, and a column 548 of a profile icon URL. The data of an icon displayed when the processing result of a task or the input content of the user is registered in the personal profile and presence DB 58, is transmitted to the user terminal 5 from the profile icon URL specified in this profile icon table.

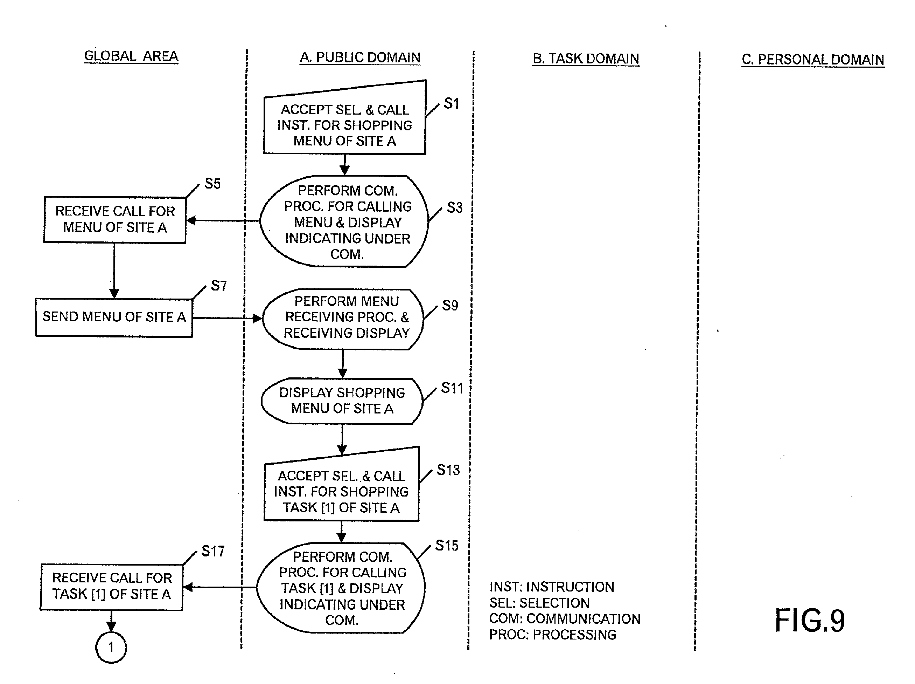

Under the system configuration as described above, processing flows in shopping and display modes will be described by the use of Figs. 9 to 38. First, a user inputs, for example, a URL of a shopping menu of a site A, or in the case where it is registered in a bookmark, the user selects the shopping menu of the site A from the bookmark, and gives a call instruction of the shopping menu of the site A. In response to this operation, this program of the user terminal 5 accepts the selection and call instruction of the shopping menu of the site A (step S1), and the communication engine 51 carries out a communication processing for calling the shopping menu of the site A. Besides, a display indicating a state under communication is carried out by an icon corresponding to the communication engine 51 and so on (step S3). The communication engine 51 transmits a request for menu data to the public service engine 31 of the service providing server 3.

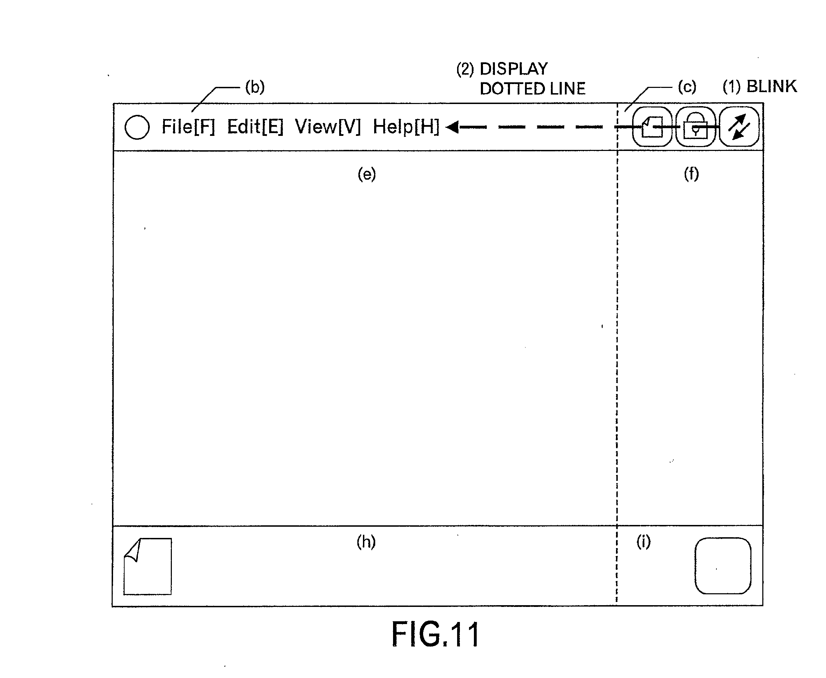

Fig. 10 shows an example of a display screen in the case of shopping. The public menu space (b) includes a service menu (File [F], Edit [E], View [V], Help [H], etc.). The communication space (c) includes a WDSL access icon, a secure access icon, a network access icon, etc. Besides, the application list space (f) includes application icons α, β and γ. The privacy space (i) includes a trash icon, an IC card icon, a privacy control icon, etc. The personal profile and presence space (h) includes a profile icon etc. However, all the icons expressed here are not used. For example, at the step S3, the network access icon is blinked or an animation is displayed to indicate a state under communication.

The public service engine 31 of the service providing server 3 receives the calling request for the shopping menu from the communication engine 51 of the user terminal 5 (step S5), and reads out the information of the shopping menu from the public service DB 33. Then, it transmits the information of the shopping menu of the site A to the user terminal 5 (step S7). The communication engine 51 of the user terminal 5 receives the information of the shopping menu, and carries out a receiving display (step S9). For example, as shown in Fig. 11, the network access icon in the communication space (c) is blinked (Fig. 11: step (1)), and a dotted line is displayed (Fig. 11: step (2)). By carrying out such display, it becomes possible to intuitively understand that the information of the shopping menu comes through the network. Then, the received information of the shopping menu of the site A is registered in the public menu DB 52, and is displayed in the public menu space (b) (step S11).

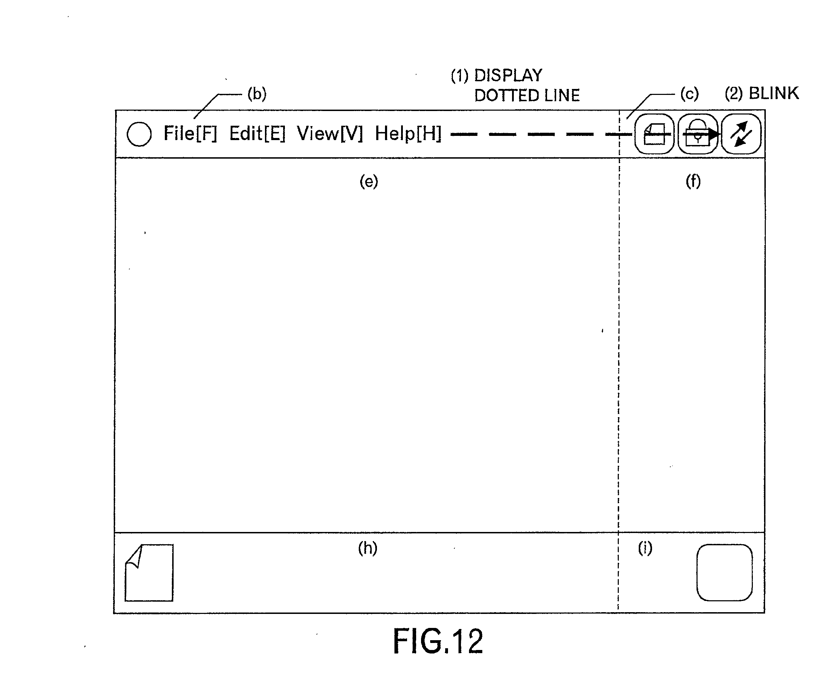

The user sees the shopping menu of the site A, selects a shopping task [1] of the site A, and inputs a call instruction. In response to this operation, the public menu DB 52 of the user terminal 5 accepts the selection and call instruction for the shopping task [1] of the site A (step S13), and outputs an activation command of the shopping task [1] of the site A to the communication engine 51. Then, the communication engine 51 carries out the call processing of the shopping task [1] of the site A in accordance with the activation command, and carries out a display indicating a state under communication (step S15). The communication engine 51 transmits a data request for the shopping task [1] to the public service engine 31 of the service providing server 3. For example, as shown in Fig. 12, in response to the selection and call instruction for the shopping task [1], a dotted line is displayed (Fig. 12: step (1)), and the network access icon is blinked (Fig. 12: step (2)). By carrying out such display, it becomes possible to intuitively understand that the request was transmitted through the network.

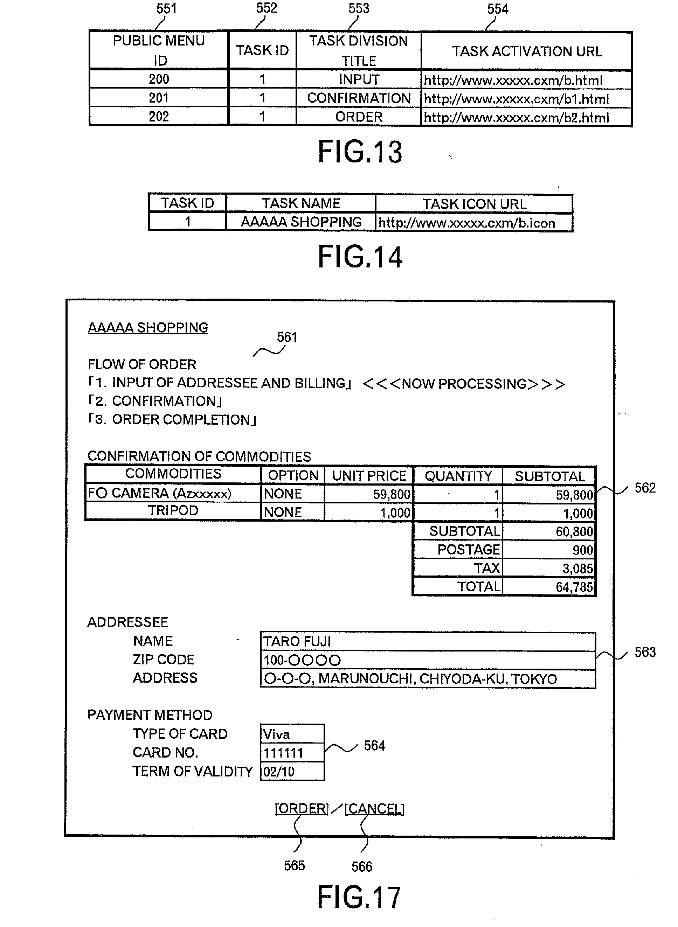

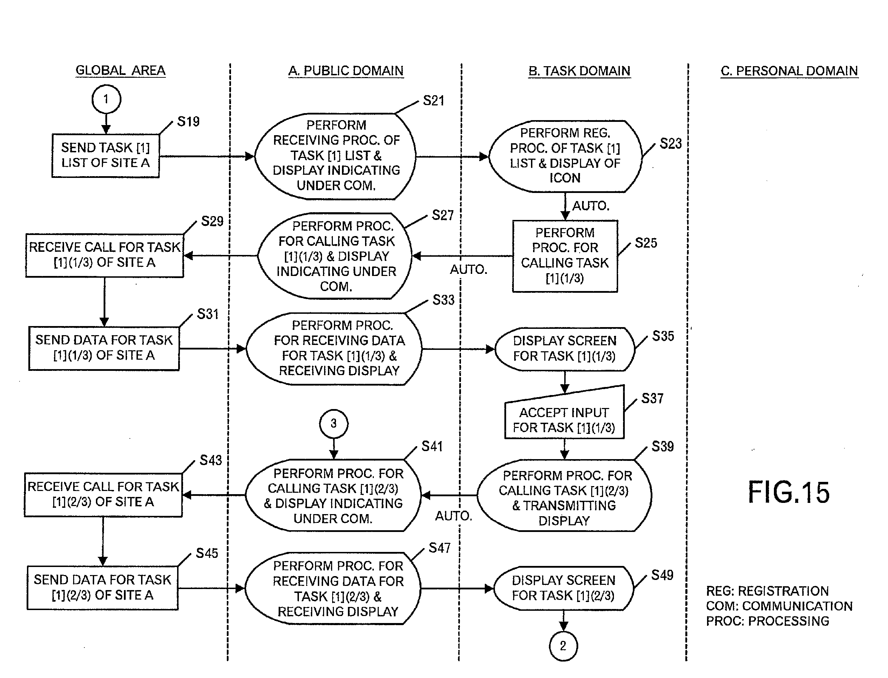

The public service engine 31 of the service providing server 3 receives the call request for the shopping task [1] from the communication engine 51 of the user terminal 5 (step S17) , and reads out information of the shopping task [1] from the public service DB 33. Here, for example, it reads out a task list of the task [1] as shown in Fig. 13. The example of Fig. 13 includes a column 551 of a public menu ID, a column 552 of a task ID, a column 553 of a task division title, and a column 554 of a task activation URL. The task [1] is constituted by three steps like this, and is processed in the sequence of the public menu ID. The respective steps are carried out on the basis of data from the URLs defined in the column 554 of the task activation URL. Besides, the public service engine 31 acquires information of a task icon on the basis of data (especially task icon URL) registered in the public service DB 33 and as shown in Fig. 14. The example of Fig. 14 includes a task ID, a task name, and a task icon URL. The processing proceeds to Fig. 15 through terminal 1.

The public service engine 31 transmits the task list of the shopping task [1] of the site A and the information of the task icon to the user terminal 5 (step S19). The communication engine 51 of the user terminal 5 receives the task list of the shopping task [1] and the information of the task icon, and continues the display indicating the state under communication (step S21). The received task list of the task [1] is registered correspondingly to the task icon, and the received information of the task icon is displayed in the application list space (f) (step S23). By carrying out such display, it becomes possible to intuitively understand that the information of the task icon has come through the network, and the task has been newly activated. Besides, there are some cases where the received task icon is subjected to emphasis displaying, such as blinking, to indicate that activation is being performed. Here, on the basis of the task list as shown in Fig. 13, a call processing of a first step (1/3) of the task [1] is automatically carried out (step S25).

In response to the call processing of the first step (1/3) of the task [1] in the task domain B, the communication engine 51 carries out the call processing of the first step (1/3) of the task [1], and carries out a display indicating the state under communication (step S27). The communication engine 51 transmits a data request for the first step (1/3) of the task [1] to the public service engine 31 of the service providing server 3.

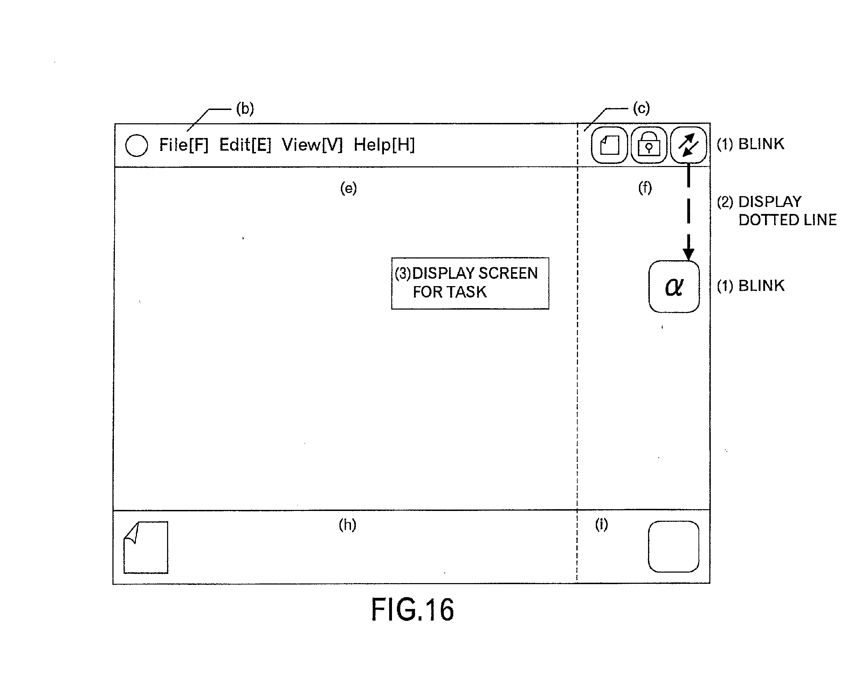

The public service engine 31 of the service providing server 3 receives the call request for the first step of the task [1] from the communication engine 51 of the user terminal 5 (step S29), and reads out data for the first step of the task [1] from the public service DB 33. Then, the public service engine 31 transmits the data for the first step (1/3) of the task [1] to the user terminal 5 (step S31). The communication engine 51 of the user terminal 5 receives the data of the first step (1/3) of the task [1], and carries out a receiving display (step S33). For example, a display as shown in Fig. 16 is carried out. The network access icon is blinked and the task icon of the task [1] is blinked (Fig. 16: step (1)). Then, a dotted line is displayed in response to the reception of the data (Fig. 16: step (2)). Thereafter, a screen of the task [1] is displayed in the presentation and task space (e). By carrying out such display, it becomes possible to intuitively understand that the data has come through the network.

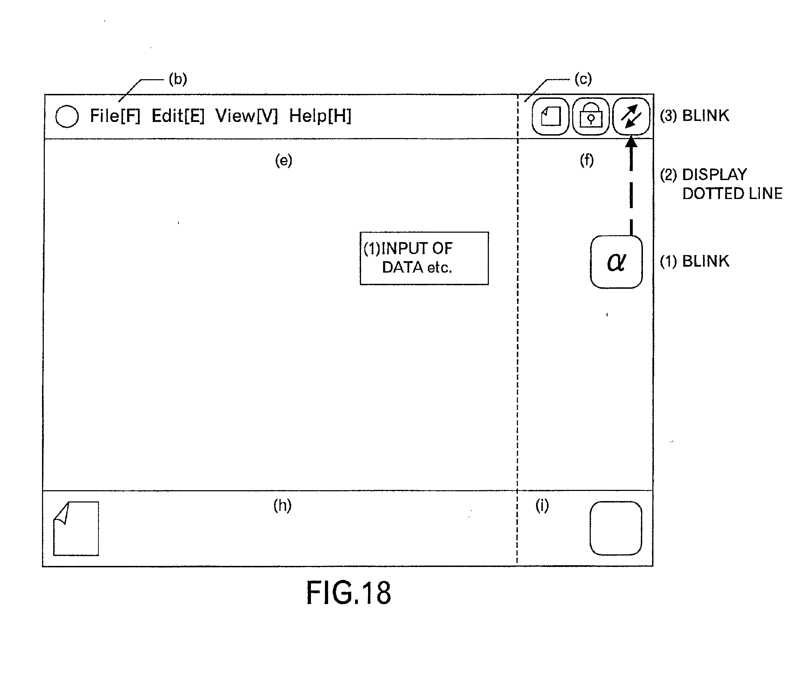

Then, the screen for the first step (1/3) of the task [1] is displayed in the presentation and task space (e) (step S35). Fig. 17 shows a screen example displayed at this step. The example of Fig. 17 includes a display portion 561 for explaining a flow of the shopping task [1], a display column 562 of a purchased commodity information table, an input column 563 of addressee information of purchased commodities, an input column 564 for settlement information, an order instruction anchor 565, and a cancel anchor 566. As shown in Fig. 13, the shopping task [1] is constituted by three steps of a step of "1. Input of addressee and billing", a step of "2. Confirmation", and a step of "3. Order completion", and it is specified that the step of "1. Input of addressee and billing" is under processing at present. The content of the information table of purchased commodities includes the information of the purchased commodities specified before the start of this task. This embodiment shows a case where the user uses a keyboard or the like to input in the input column 563 for the addressee information and the input column 564 for the settlement information. However, as described later, there are some cases where data registered in the personal profile and presence DB 58 is used.

The user sees the display of the presentation and task space (e), and inputs requested information in the input columns. Then, in the case where an order is actually made, the order instruction anchor 565 is clicked, and in the case where an order is cancelled, the cancel anchor 566 is clicked. Here, it is assumed that the order instruction anchor 565 has been clicked. The presentation and task execution unit 55 of the user terminal 5 accepts the input to the first step (1/3) of the task [1] from the user (step S37), and carries out transmission of the input data and a call processing of a second step (2/3) of the task [1] in response to this operation. Besides, a transmitting display of the input data etc. is carried out (step S39). Besides, in response to the call processing of the second step (2/3) of the task [1] in the task domain B and the transmission request of the input data and the like, the communication engine 51 carries out the call processing of the second step (2/3) of the task [1] and the transmission processing of the input data and the like, and carries out a display indicating a state under communication (step S41). The communication engine 51 transmits the input data and a data request for the second step (2/3) of the task [1] to the public service engine 31 of the service providing server 3.

Fig. 18 shows an example of a screen display at the steps S39 and S41. In the example of Fig. 18, the icon of the task under execution is blinked, and in response to the input of data or the click of "Order anchor" (Fig. 18: step (1)), a dotted line is displayed (Fig. 18: step (2)), and the network access icon is blinked (Fig. 18: step (3)). By carrying out such display, it becomes possible to intuitively understand that the input data are transmitted through the network.

The public service engine 31 of the service providing server 3 receives the input data from the communication engine 51 of the user terminal 5 and the call request for the second step (2/3) of the task [1] (step S43), tentatively registers the received input data in the public service DB 33, and reads out the data for the second step (2/3) of the task [1] from the public service DB 33. Then, the public service engine 31 transmits the data for the second step (2/3) of the task [1] to the user terminal 5 (step S45). The communication engine 51 of the user terminal 5 receives the data for the second step (2/3) of the task [1], and carries out a receiving display (step S47). For example, the display as shown in Fig. 16 is carried out. By carrying out such display, it becomes possible to intuitively understand that the data has come through the network.

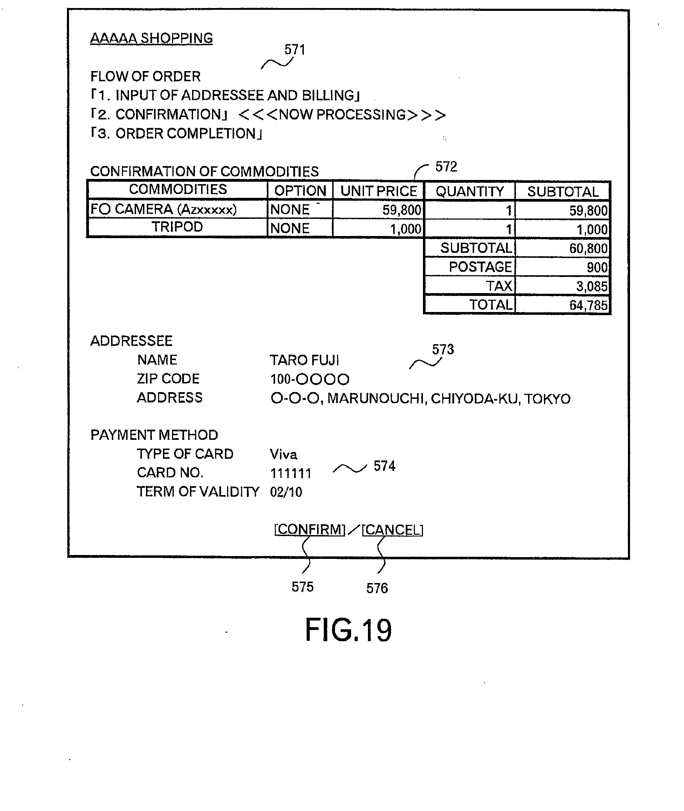

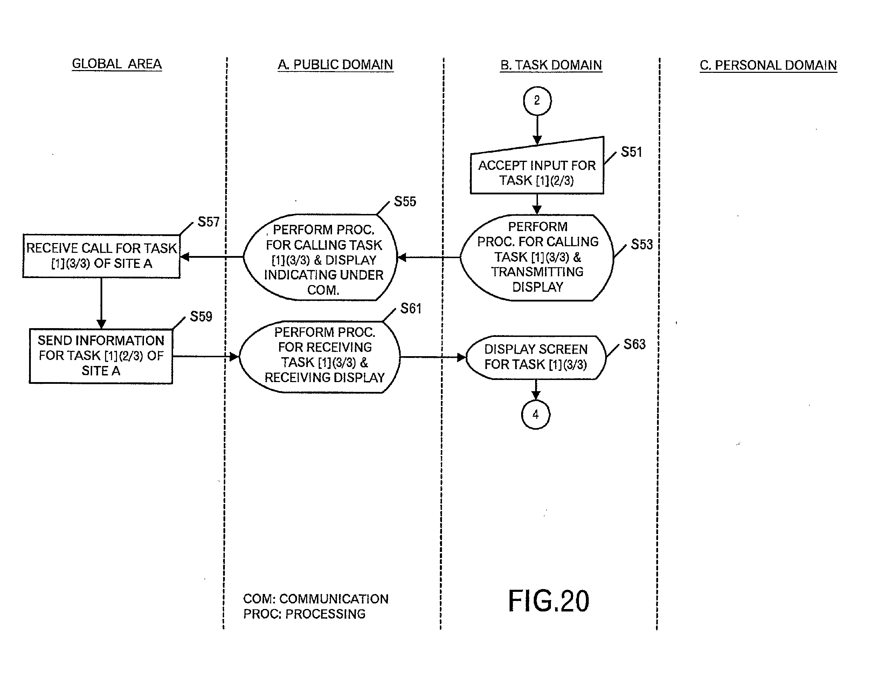

Then, a screen for the second step (2/3) of the task [1] is displayed in the presentation and task space (e) (step S49). Fig. 19 shows a screen example displayed at this step. The example of Fig. 19 includes a display portion 571 for explaining the flow of the shopping task [1], a display column 572 of a purchased commodity information table, a display portion 573 of addressee information of purchased commodities, a display portion 574 for settlement information, a confirmation instruction anchor 575 of order content, and a cancel anchor 576. In the display portion 571 for explaining the flow of the shopping task [1], it is specified that the step of "2. Confirmation" is under processing at present. The information inputted on the previous screen is displayed in the display portion 573 for the addressee information and the display portion 574 for the settlement information. A subsequent processing proceeds to a processing of Fig. 20 through terminal 2.

The user sees the display of the presentation and task space (e), and confirms the order content. If there is no problem in the order content, the user clicks the confirmation instruction anchor 575, and in the case where the order is cancelled, the user clicks the cancel anchor 576. Here, it is assumed that the confirmation instruction anchor 575 has been clicked. The presentation and task execution unit 55 of the user terminal 5 accepts the input with respect to the second step (2/3) of the task [1] from the user (step S51), and carries out a call processing of a third step (3/3) of the task [1] in response to this operation. Besides, a transmitting display is carried out (step S53). Besides, in response to the call processing of the third step (3/3) of the task [1] in the task domain B, the communication engine 51 carries out the call processing for the third step (3/3) of the task [1], and carries out a display indicating a state under communication (step S55). The communication engine 51 transmits a data request for the third step (3/3) of the task [1] to the public service engine 31 of the service providing server 3. At the steps S53 and S55, for example, the display as shown in Fig. 18 is carried out.

The public service engine 31 of the service providing server 3 receives the call request for the third step (3/3) of the task [1] from the communication engine 51 of the user terminal 5 (step S57), and reads out the data for the third step (3/3) of the task [1] from the public service DB 33. Then, the public service engine 31 transmits the data for the third step (3/3) of the task [1] to the user terminal 5 (step S59). The communication engine 51 of the user terminal 5 receives the data for the third step (3/3) of the task [1], and carries out a receiving display (step S61). For example, the display as shown in Fig. 16 is carried out.

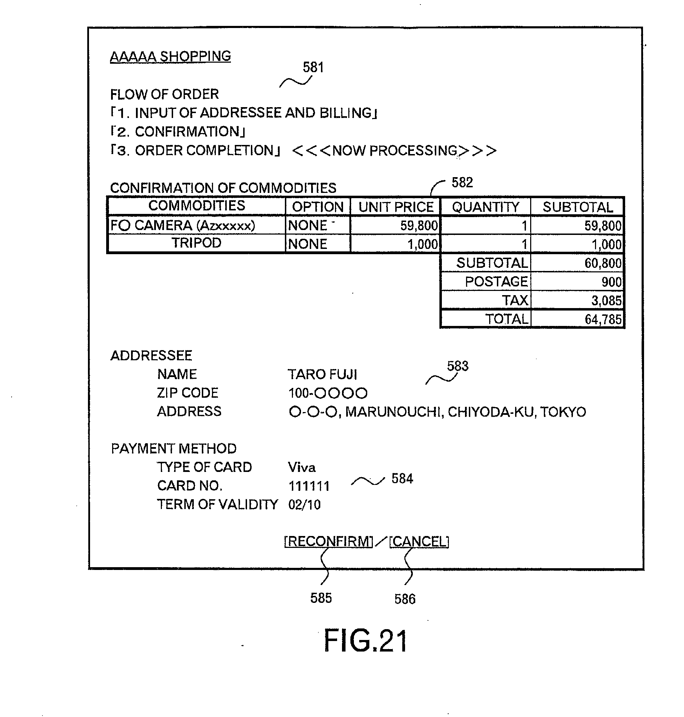

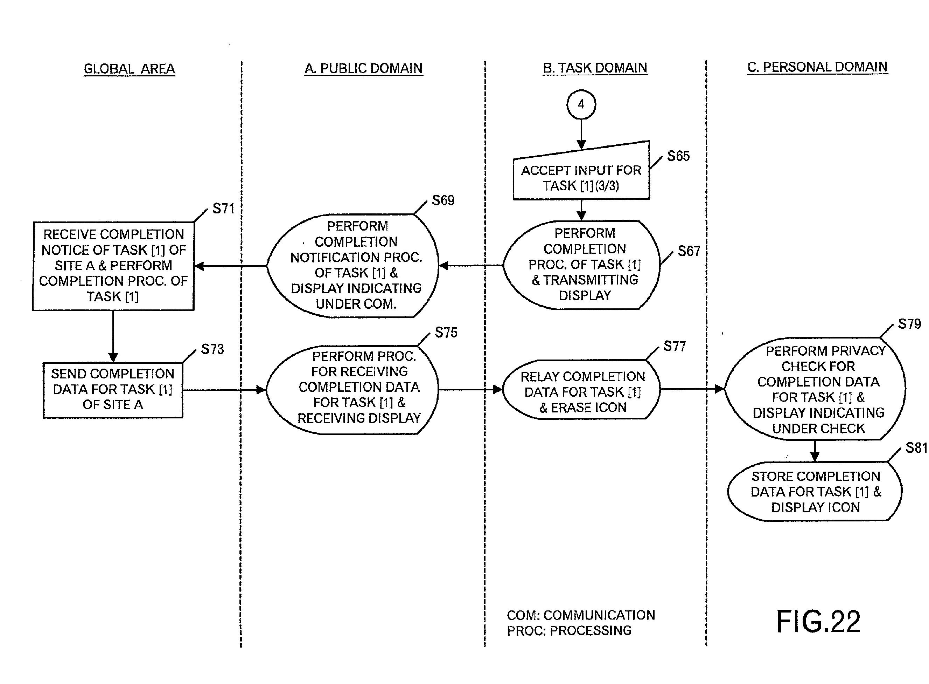

Then, a screen for the third step (3/3) of the task [1] is displayed in the presentation and task space (e) (step S63). Fig. 21 shows a screen example displayed at this step. The example of Fig. 21 includes a display portion 581 for explaining the flow of the shopping task [1], a display column 582 of a purchased commodity information table, a display portion 583 of addressee information of purchased commodities, a display portion 584 for settlement information, an order content reconfirmation instruction anchor 585, and a cancel anchor 586. Although the screen is almost the same as Fig. 19, in the display portion 581 for explaining the flow of the shopping task [1], it is specified that the step of "3. Order completion" is under processing at present. A subsequent processing proceeds to a processing of Fig. 22 through terminal 4.

The user sees the display of the presentation and task space (e) and reconfirms the order content. If there is no problem in the order content, the reconfirmation instruction anchor 585 is clicked, and in the case where the order is cancelled, the cancel anchor 586 is clicked. Here, it is assumed that the reconfirmation instruction anchor 585 has been clicked. The presentation and task execution unit 55 of the user terminal 5 accepts the input with respect to the third step (3/3) of the task [1] from the user (step S65), carries out a completion processing of the task [1] in response to this operation, and carries out a transmitting display (step S67). As the completion processing of the task [1], for example, discard of the task list registered correspondingly to the task icon is carried out. Besides, in response to the completion processing of the task [1] in the task domain B, the communication engine 51 carries out a completion notification processing of the task [1], and carries out a display indicating a state under communication (step S69). The communication engine 51 transmits a completion data request for the task [1] to the public service engine 31 of the service providing server 3. At the step S67 and S69, for example, the display as shown in Fig. 18 is carried out.

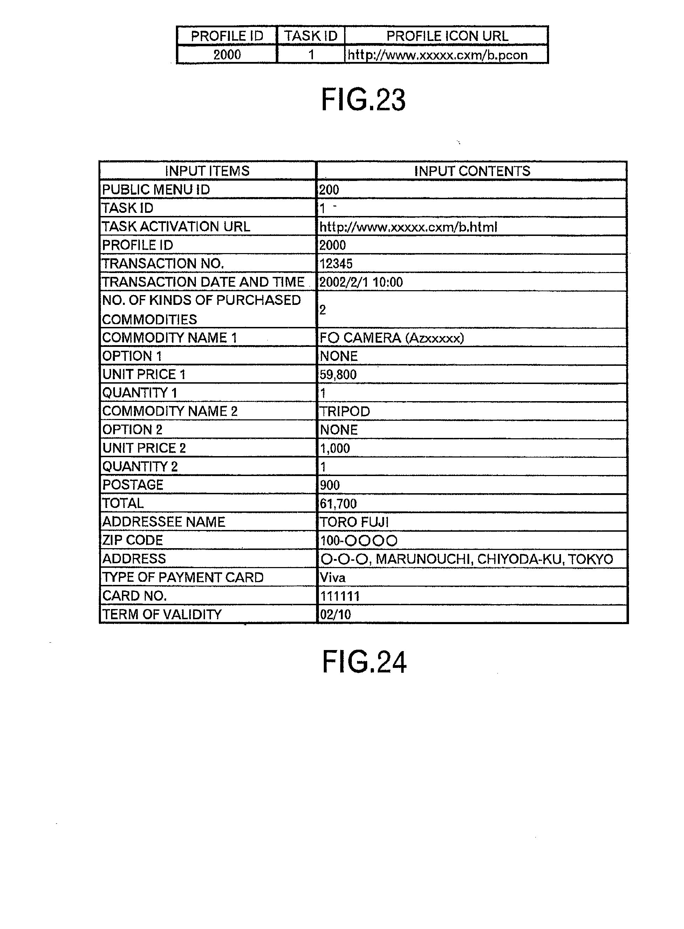

The public service engine 31 of the service providing server 3 receives the completion notice for the task [1] from the communication engine 51 of the user terminal 5, and carries out a completion processing of the task [1], including a processing of normally registering the order information, which was tentatively registered at the step S43, in the public service DB 33 (step S71). In the completion processing of the task [1], profile data (Fig. 24) to be stored in the user terminal 5 is generated, and information of a profile icon corresponding to the profile data is acquired from the public service DB 33 on the basis of information as shown in Fig. 23. Fig. 23 shows a part of a profile icon URL table, and includes a profile ID, a task ID, and a profile icon URL. Accordingly, the profile icon URL in which the profile icon is stored is acquired from the ID of the task, the processing of which is completed at this time, and the information of the profile icon is acquired from the profile icon URL.

Fig. 24 shows an example of the profile data generated in the completion processing of the task [1]. The example of Fig. 24 includes input contents (not limited to only the data inputted by the user) corresponding to respective input items. Here, the data includes information such as a public menu ID, a task ID, a task activation URL, a profile ID, a transaction number, a transaction date and time, the number of kinds of purchased commodities, a commodity name 1, an option 1, a unit price 1, a quantity 1, a commodity name 2, an option 2, a unit price 2, a quantity 2, postage, total, an addressee's name, a zip code, an address, a type of a card, a name of a card, and a term of validity. These data are described using, for example, XML in accordance with predetermined rules.

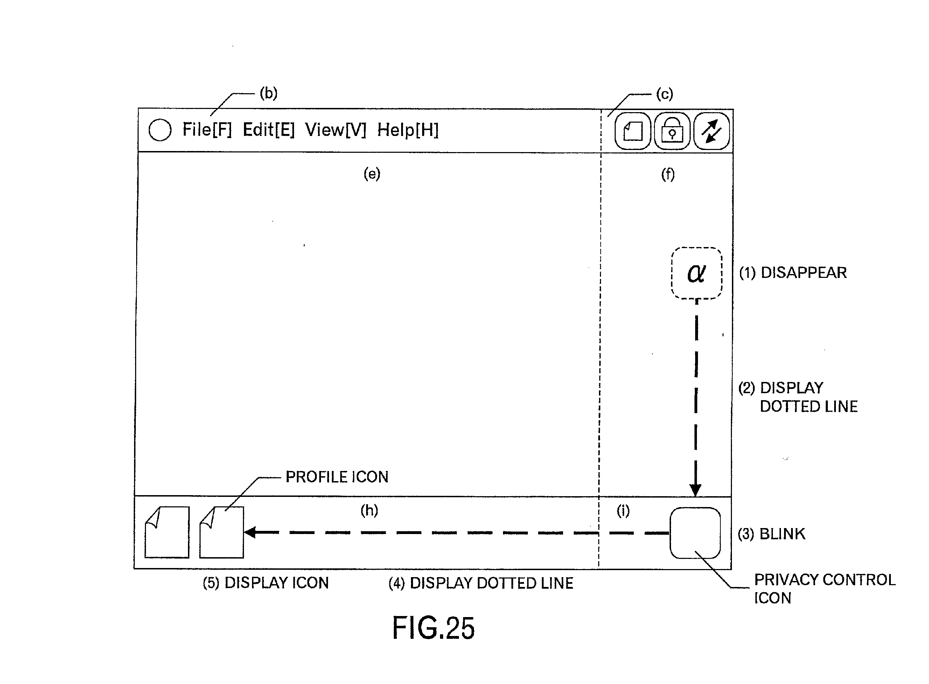

The public service engine 31 transmits the completion data of the task [1] (including the profile data and the information of the profile icon) to the user terminal 5 (step S73). The communication engine 51 of the user terminal 5 receives the completion data of the task [1] and carries out a receiving display (step S75). Besides, the object of the task icon relays and outputs the completion data of the task [1] from the communication engine 51 to the privacy engine 57, and erases the task icon (step S77). The privacy engine 57 carries out a privacy check on the completion data of the task [1], and carries out a display indicating a state under check (step S79). In the case where data is read out from the personal profile and presence DB 58 of the personal domain C, the privacy engine 57 judges whether the readout should be permitted, or displays a screen for warning or inquiry to the user. However, in the case where data is merely registered, there are some cases where a special processing is not carried out. Here, it is assumed that a special processing is not carried out. Then, the completion data of the task [1] is held in the personal profile and presence DB 58, and the profile icon is displayed in the personal domain C (step S81). At the steps S77 to S81, for example, a display as shown in Fig. 25 is carried out.

In the example of Fig. 25, the task icon disappears (Fig. 25: step (1)), and after a dotted line is displayed from the task icon to the privacy control icon (Fig. 25: step (2)), for example, the privacy control icon is blinked (Fig. 25: step (3)). Besides, a dotted line is displayed in the personal domain C (Fig. 25: step (4)), and an icon display of the profile icon is carried out (Fig. 25: step (5)). By carrying out such display, the user can recognize the existence of the profile icon in the personal domain C of the lower part of the screen. That is, since the important object of the order result, to which people pay highest attention, is presented in the region for displaying their own personal information, a more intuitive operation as described below is enabled.

In the above, although the processing flow at the time of order of shopping has been described, for example, the profile data as shown in Fig. 24 may be generated in the presentation and task execution unit 55. However, since partial data such as a transaction number must be identical to the public service DB 33, there are some cases where it is received from the service providing server 3 as completion data. Besides, also with respect to the profile icon and the task icon, there are some cases where the public service engine 31 transmits the data of Fig. 14 and Fig. 23 read out from the public service DB 33 to the user terminal 5, and they are acquired on the basis of the data of Fig. 14 and Fig. 23 in the user terminal 5.

Incidentally, although the explanation is omitted in the above, since the order processing in shopping is very important, the communication between the communication engine 51 and the public service engine 31 of the service providing server 3 is encrypted by SSL or the like. Accordingly, in the communication space (c), the secure access icon is displayed in a state indicating encryption. Besides, a security check is carried out each time communication with the public service engine 31 is performed. Further, as the need arises, a screen for inquiry to the user or confirmation is displayed.

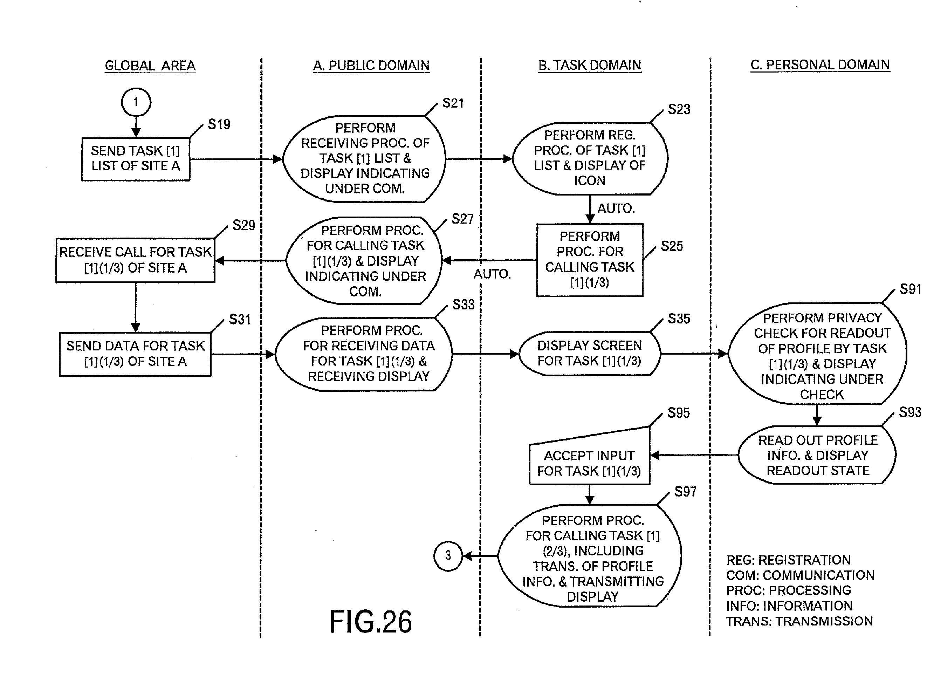

Besides, the description has been given for the example in which at the time of order in shopping, the user inputs the address and the credit card number. In such a case, when the personal information is inputted, there does not particularly arise a problem of privacy. This is because that the user inputs the information means that a judgment that it should be inputted has been made. However, in the case where the data of the first page (1/3) of the task [1] is set such that the profile information, such as the credit card number, address and name, is automatically read out from the personal profile and presence DB 58, it is necessary that the privacy engine 57 judges the suitableness of the readout of the profile information or requests permission for the user. A processing flow of such a case will be described by the use of Fig. 26.

In Fig. 26, since step S19 to step S35 are the same as the step S19 to the step S35 of Fig. 15, they are designated by the same step numbers and their explanation is omitted here. At step S35, after the screen display of the first step (1/3) of the task [1] is carried out, in accordance with the setting of the first step of the task [1], the presentation and task execution unit 55 carries out a reference processing to the profile data. In response to this reference, the privacy engine 57 carries out a privacy check on the readout of the profile data by the first step (1/3) of the task [1]. For example, in a case where information permitted to be disclosed to the site A is set, the kind of requested information (here, credit card number, address, and name) is compared with the permitted information, and it is judged whether they are coincident with each other. Incidentally, as described above as well, there are various modes in the setting in the privacy engine 57. There are some cases where when the disclosure is once permitted, an inquiry is not made to the user after the first time, alternatively, sites are previously specified and information permitted to be disclosed is set, and so on. With respect to the privacy, it is possible that the privacy policy of the site and the conditions of the inflow and/or outflow of the profile information are prescribed in accordance with the specification of P3P (Platform for Privacy Preferences), and a judgment is made according to the coincidence of those conditions. In any event, in the case where there is no permission, a processing is carried out such that a window is opened to inquire of the user, or an inquiry is made through a balloon. When the check is being carried out, a display of blinking of a privacy control icon is carried out (step S91). Here, it is assumed that the reference of the profile information has been permitted. Then, a readout processing of the profile information is carried out, and a display to indicate that the profile information has been read out is carried out (step S93).

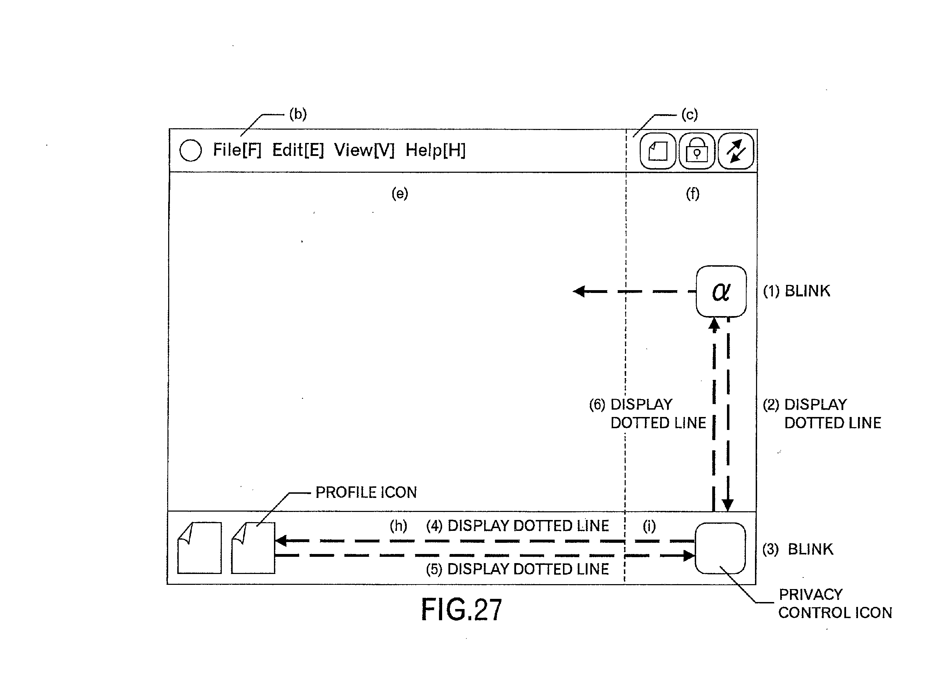

For example, a display as shown in Fig. 27 is carried out. For example, the task icon is blinked (Fig. 27: step (1)), a dotted line from the task icon to the privacy control icon is displayed (Fig. 27: step (2)), and the privacy control icon is blinked (Fig. 27: step (3)). In the case where the reference is permitted, a dotted line from the privacy control icon to the profile icon is displayed (Fig. 27: step (4)), and in response to the readout of the profile information, a dotted line from the profile icon to the privacy control icon is displayed (Fig. 27: step (5)). Here, the blinking of the privacy control icon is ended, a dotted line from the privacy control icon to the task icon is displayed (Fig. 27: step (6)), and the dotted line is extended into the presentation and task space (e).

Here, a state of a display as shown in Fig. 17 occurs. That is, the name and address are embedded in the input column 563 of the addressee information, and the information of a credit card is embedded in the input column 564 of the settlement information. Then, it is assumed that the order instruction anchor 565 has been clicked by the user. The presence and task execution unit 55 of the user terminal 5 accepts the click of the order instruction anchor 565 (step S95), and carries out the transmission of the read profile information in response to this operation and the call processing for the second step (2/3) of the task [1]. Besides, a transmitting display of the data is carried out (step S97). Then, the processing proceeds to the step S41 of Fig. 15 through terminal 3.

By carrying out such processing, after the privacy check is carried out in accordance with the setting, the user can use the profile information to lessen the input information, and it becomes possible to more simply process the task. Since the privacy check can be set in various modes, the user can avoid transmitting the personal information through the network unnecessarily. Besides, by carrying out the display as shown in Fig. 27, the user can intuitively understand the use of the profile information.

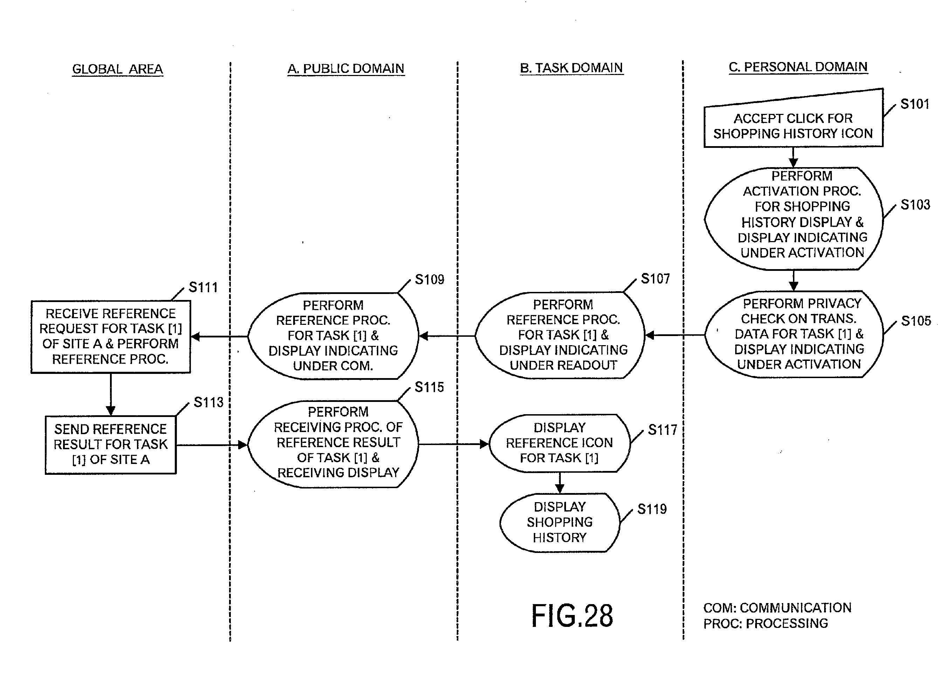

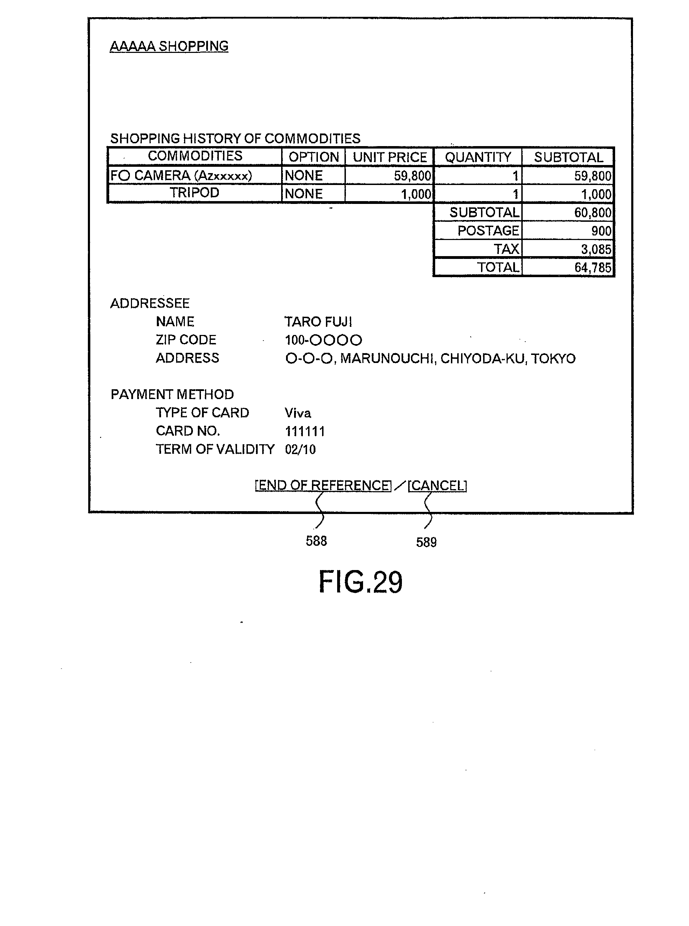

Next, the use of the profile icon displayed at the step S81 in the personal domain C will be described using Figs. 28 and 29. Incidentally, here, the profile icon is called a shopping history icon. The user selects this shopping history icon by double-clicking or the like. The personal profile and presence DB 58 accepts the selection instruction of the shopping history icon (step S101), carries out an activation processing of a shopping history display, and carries out a display indicating a state under activation (step S103). In the activation processing, data in the personal profile and presence DB 58, which corresponds to the selected and instructed shopping history icon, is read out and is outputted to the privacy engine 57. Besides, the selected and instructed shopping history icon is blinked, and a dotted line is displayed from the shopping history icon (profile icon) to the privacy control icon as shown at the step (5) of Fig. 27, to carry out a display indicating a state under activation.

The privacy engine 57 carries out a privacy check on the data which is read out from the personal profile and presence DB 58 and is required when the shopping history is displayed, and carries out a display indicating a state under check (step S105). The data as an object of the privacy check is, for example, the data as shown in Fig. 24. Since the task activation URL is included in this, the destination of the data can be specified. The privacy engine 57 carries out a check on the basis of the setting indicating what data may be transmitted to the task activation URL or can not be transmitted. In a case where data, the transmission of which is not permitted, is included, there are some cases where the user is requested to permit the transmission. The display indicating the state under check is, for example, the blinking of the privacy control icon.

When the data transmission is permitted by the privacy engine 57 or the user, also in the task domain B, the shopping history reference processing for the task [1] is carried out with the task ID and the task activation URL included in Fig. 24, and a display indicating that the shopping history is being read out is carried out (step S107). As the display indicating that the shopping history is being read out, for example, a dotted line is displayed from the privacy control icon to the network access icon in the communication space (c).

In response to the shopping history reference processing for the task [1] in the task domain B, the communication engine 51 carries out the shopping history reference processing for the task [1], and carries out a display indicating a state under communication (step S109). The communication engine 51 transmits a data request for a shopping history of the task [1], including information to specify the transaction, such as a transaction number, to the public service engine 31 of the service providing server 3.

The public service engine 31 of the service providing server 3 receives the shopping history reference request for the task [1] from the communication engine 51 of the user terminal 5, and reads out the shopping history for the task [1] on the basis of the information specifying the transaction, such as a transaction number, from the service DB 33 (step S111). Besides, the information of a task icon symbolizing the shopping history reference result for the task [1] is read out from the public service DB 33. Then, the public service engine 31 transmits the shopping history reference result for the task [1] and the information of the task icon to the user terminal 5 (step S113). The communication engine 51 of the user terminal 5 receives the shopping history reference result for the task [1] and the information of the task icon, and carries out a receiving display (step S115). For example, the network access icon of the communication space (c) is blinked.

Then, the task icon of the shopping history reference for the task [1] is displayed in the application list space (f) (step S117). Besides, a dotted line may be displayed from the network access icon to the task icon of the shopping history reference. Then, a screen display of the shopping history is carried out in the presentation and task space (e) (step S119).

Fig. 29 shows an example of the shopping history screen. The example of Fig. 29 is almost the same as the display screen (Fig. 21) at the time of order completion. However, in Fig. 29, only a "end of reference" anchor 588 or a cancel anchor 589 can be clicked.

As stated above, the user can acquire the information of the shopping history from the shopping history icon displayed in the personal domain C to display it. Conventionally, since there is no icon for expressing a shopping history as an object, it has been necessary to access the service providing server 3, to turn over pages in a predetermined procedure, and to go to the page of the shopping history. This does not enable an operation along the human behavioral model and mental model. In this embodiment, the shopping history icon is displayed in the personal domain C, and the reference processing can be activated from this shopping history icon, so that the operation along the human behavioral model and mental model is enabled, and the display is enabled in which the network environment can be recognized.

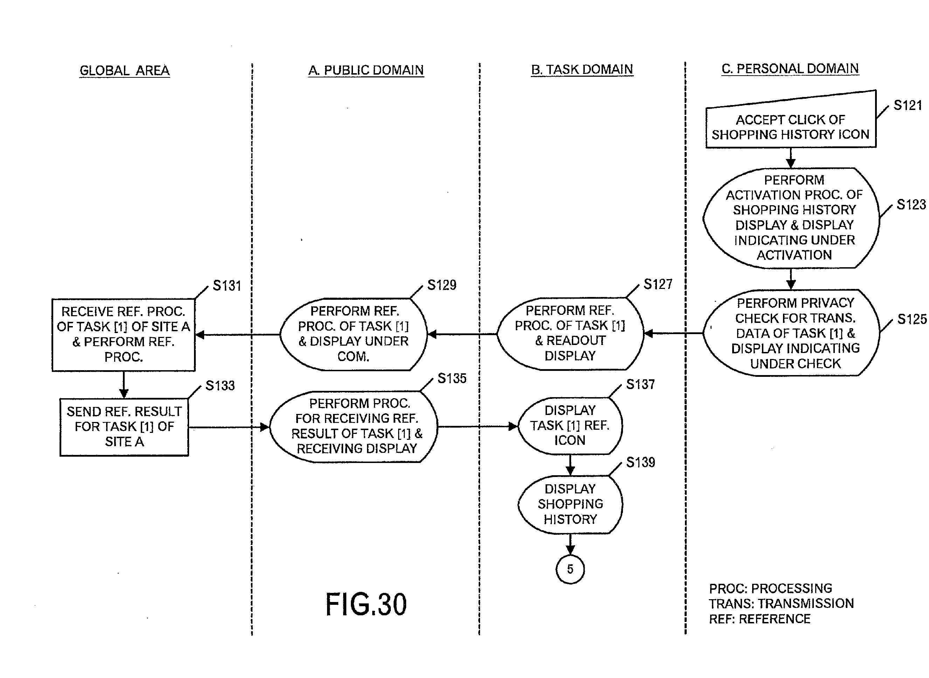

Next, a cooperation processing with a map application as a resident task will be described by the use of Figs. 30 to 36. The user selects a shopping history icon displayed in the personal domain C by double-clicking or the like. The personal profile and presence DB 58 accepts the selection instruction of the shopping history icon (step S121), carries out an activation processing of a shopping history display, and carries out a display indicating a state under activation (step S123). In the activation processing, data in the personal profile and presence DB 58, corresponding to the selected and instructed shopping history icon, is read out, and is outputted to the privacy engine 57. Besides, the selected and instructed shopping history icon is blinked, or a dotted line is displayed from the shopping history icon (profile icon) to the privacy control icon as shown at the step (5) of Fig. 27, so that a display indicating a state under activation is carried out.

The privacy engine 57 carries out a privacy check on the data which is read out from the personal profile and presence DB 58 and is required when the shopping history is displayed, and carries out a display indicating a state under check (step S125). The data as an object of the privacy check is, for example, the data as shown in Fig. 24. Since the task activation URL is included therein, the destination of the data can be specified. The privacy engine 57 carries out a check on the basis of the setting indicating what data may be transmitted to the task activation URL and can not be transmitted. In a case where data, the transmission of which is not permitted, is included, the user may be requested to permit the transmission. The display indicating the state under check is, for example, the blinking of the privacy control icon.

When the data transmission is permitted by the privacy engine 57 or the user, also in the task domain B, the shopping history reference processing for the task [1] is carried out with the task ID and the task activation URL included in Fig. 24, and a display indicating a state under readout of the shopping history is carried out (step S127). As the display indicating the state under readout of the sopping history, for example, a dotted line is displayed from the privacy control icon to the network access icon of the communication space (c).

In response to the shopping history reference processing for the task [1] in the task domain B, the communication engine 51 carries out the shopping history reference processing for the task [1], and carries out a display indicating a state under communication (step S129). The communication engine 51 transmits a data request for the shopping history of the task [1], including information to specify the transaction, such as a transaction number, to the public service engine 31 of the service providing server 3.

The public service engine 31 of the service providing server 3 receives the shopping history reference request for the task [1] from the communication engine 51 of the user terminal 5, and reads out the shopping history for the task [1] on the basis of the information to specify the transaction, such as a transaction number, from the public service DB 33 (step S131). Besides, information of a task icon for expressing the shopping history reference result of the task [1] is read out from the public service DB 33. Then, the public service engine 31 transmits the shopping history reference result of the task [1] and the information of the task icon to the user terminal 5 (step S133). The communication engine 51 of the user terminal 5 receives the shopping history reference result of the task [1] and the information of the task icon, and carries out a receiving display (step S135). For example, the network access icon of the communication space (c) is blinked.

Then, the task icon of the shopping history reference of the task [1] is displayed in the application list space (f) (step S137). The task icon may be displayed after a dotted line is displayed from the network access icon to the display position of the task icon of the shopping history reference. Then, a screen display of the shopping history is carried out in the presentation and task space (e) (step S139).

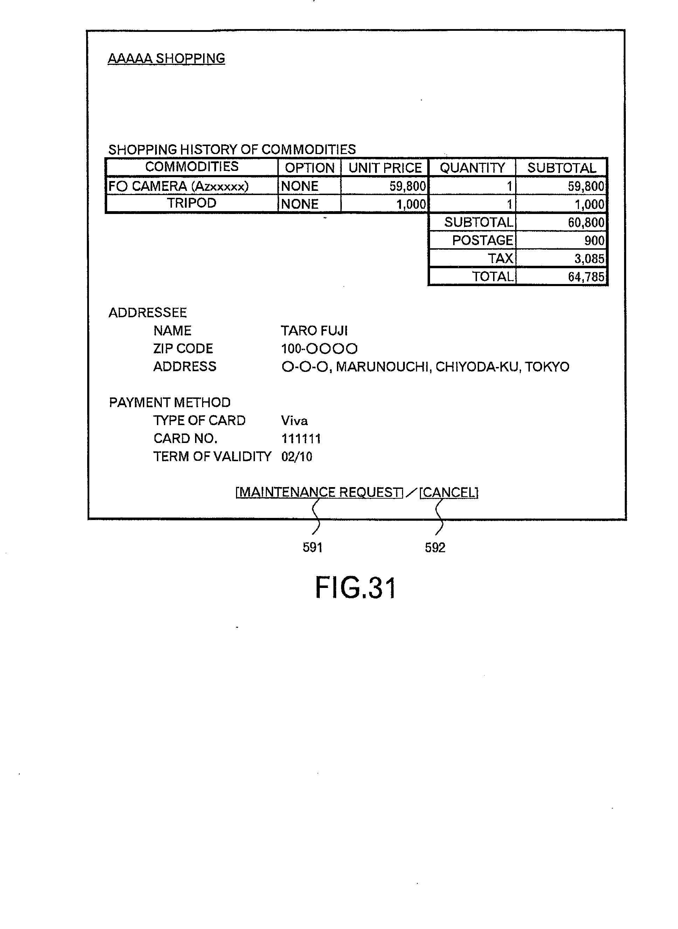

Fig. 31 shows an example of the shopping history screen. The example of Fig. 31 is almost the same as the display screen (Fig. 21) at the time of order completion. However, in Fig. 31, only a maintenance request anchor 591 or a cancel anchor 592 can be clicked.

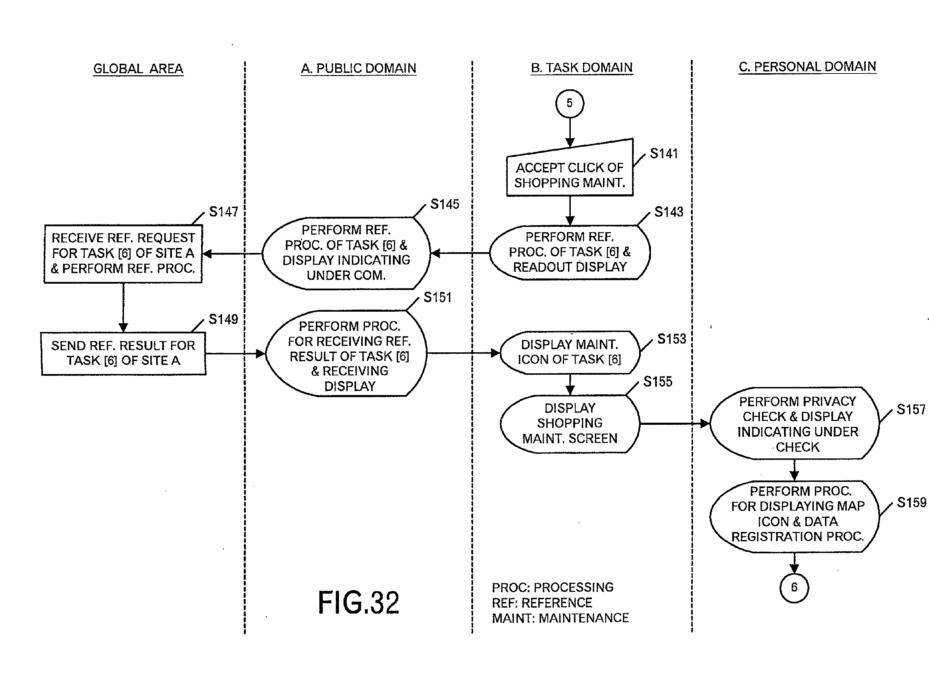

The processing proceeds to Fig. 32 through terminal 5. When making a maintenance request, the user clicks the maintenance request anchor 591. In response to this operation, the presentation and task execution unit 55 accepts the click of the maintenance request anchor 591 (step S141), recognizes that a task [6] of task ID = 6 is selected, and carries out a reference processing of the task [6] and a readout processing (step S143). In the reference processing of the task [6], information to identify an order, such as a transaction number, acquired when the screen as shown in Fig. 31 is displayed is outputted to the communication engine 51. Besides, a dotted line is displayed to extend to the network access icon of the communication space (c) through the task icon of the shopping history reference.

In response to the reference processing of the task [6] in the task domain B, the communication engine 51 carries out the reference processing of the task [6], and carries out a display indicating a state under communication (step S145). The communication engine 51 transmits a data request for the task [6], including information to specify the transaction, such as a transaction number, to the public service engine 31 of the service providing server 3.

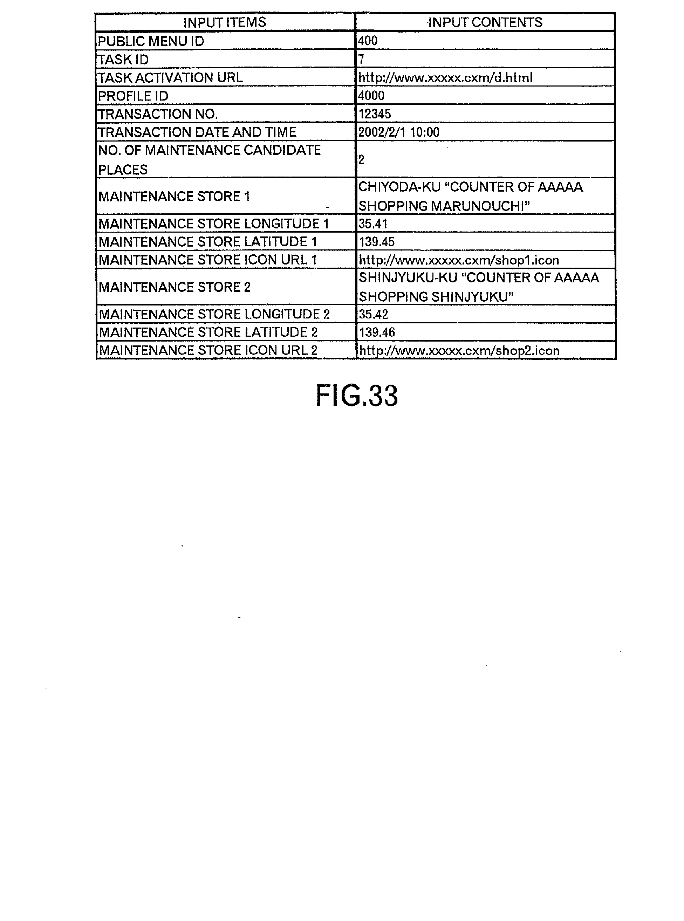

The public service engine 31 of the service providing server 3 receives the reference request for the task [6] from the communication engine 51 of the user terminal 5, and carries out the reference processing of the task [6] (step S147). In the reference processing of the task [6], the information of the shopping history is read out from the public service DB 33 on the basis of the information to specify the transaction, such as a transaction number, from the public service DB 33, and information of maintenance reception candidate places near the destination address included in the information of the shopping history is extracted. Further, information of a task icon (here, called a maintenance icon) to express the task [6], and information indicating a profile icon (here, called a map icon) to express the reference result of the task [6] are read out from the public service DB 33. The public service engine 31 transmits the reference result of the task [6] and the information of the maintenance icon and the map icon to the user terminal 5 (step S149). The reference result includes both the information for display in the presentation and task space (e) and the profile data corresponding to the map icon. Fig. 33 shows an example of the profile data to be transmitted here. In Fig. 33, a column of input items and a corresponding column of input contents are provided. Incidentally, although the word "input" is used, they are not limited to input information of the user. In the example of Fig. 33, there are stored a public menu ID, a task ID, a task activation URL, a profile ID, a transaction number, a transaction date and time, the number of maintenance candidate places, a maintenance store name 1, a maintenance store longitude 1, a maintenance store latitude 1, a maintenance store icon URL 1, a maintenance store name 2, a maintenance store longitude 2, a maintenance store latitude 2, and a maintenance store icon URL 2.

The communication engine 51 of the user terminal 5 receives the reference result of the task [6] and the information of the maintenance icon and the map icon, and carries out a receiving display (step S151). For example, the network access icon of the communication space (c) is blinked.

Then, the maintenance icon for expressing the reference result of the task [6] is displayed in the application list space (f) (step S153). The maintenance icon may be displayed after a dotted line is displayed from the network access icon to the maintenance icon display position. Then, a screen display of the reference result is carried out in the presentation and task space (e) (step S155).

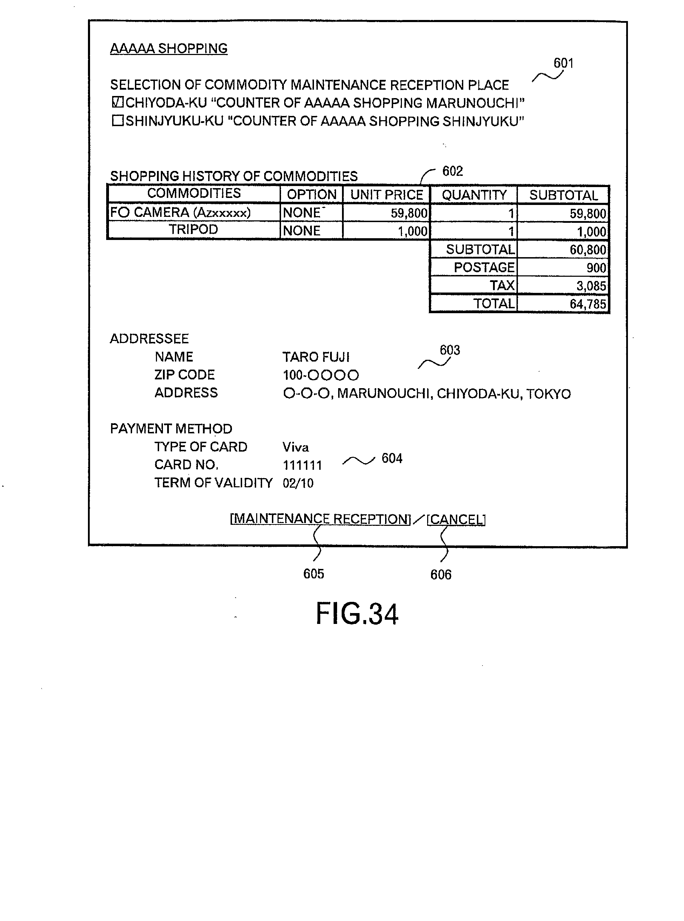

At the step S155, for example, a screen as shown in Fig. 34 is displayed in the presentation and task space (e). The example of Fig. 34 includes a commodity maintenance reception place selecting part 601 for selecting a maintenance reception place, which is one of Chiyoda-ku and Sinjyuku-ku, a purchase history table display column 602, a destination display part 603, a settlement information display part 604, a maintenance reception anchor 605, and a cancel anchor 606. The user sees the commodity maintenance reception place selecting part 601 and can decide that he or she should request maintenance from which store.

The information (Fig. 33) of the received reference result and the information of the map icon are outputted to the privacy engine 57, and a privacy check is carried out. During the processing of the privacy check, a display indicating a state under check is carried out, for example, the privacy control icon is blinked (step S157). If there is no problem in the privacy check, the information of the reference result (Fig. 33) is registered in the personal profile and presence DB 58, and the map icon is displayed in the personal domain C (step S159). At the step S153 to the step S159, for example, the display as shown in Fig. 25 is carried out. However, here, the maintenance icon as the task icon is first displayed. At the step S157, at least two icons, that is, the profile icon of the shopping history and the map icon are displayed in the personal domain C.

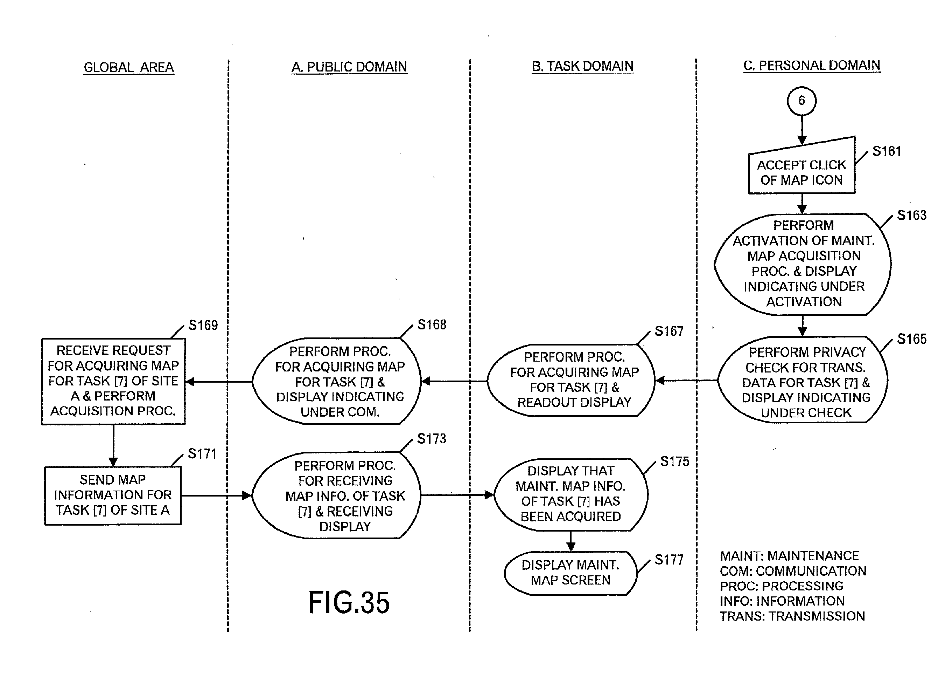

The processing proceeds to Fig. 35 through terminal 6. If there is nothing other than the display of the presentation and task space (e) as shown in Fig. 34, there are some cases where it is impossible to decide which commodity maintenance reception place should be selected. In such a case, it is convenient if the commodity maintenance reception places are displayed on a map. Thus, the user clicks the map icon displayed in the personal space C. The personal profile and presence DB 58 accepts the click of the map icon by the user (step S161), and reads out profile data stored in the personal profile and presence DB 58 and corresponding to the map icon. This is, for example, the data as shown in Fig. 33. Here, the data as shown in Fig. 33 includes the information indicating a position, such as latitude and longitude. In such a case, the data as shown in Fig. 33 is outputted to the map application as the resident task, and the map application carries out a processing by using the data provided from the task activation URL (activated task is a task [7]) (step S165). Accordingly, as an activation processing of maintenance map acquisition, the personal profile and presence DB 58 outputs data read out from the personal profile and presence DB 58 to the privacy engine 57. Then, as an activation display, a dotted line as in the step (5) in Fig. 27 is displayed.

The privacy engine 57 carries out a privacy check on the data (data for the task [7]) read out from the personal profile and presence DB 58 and required when the maintenance map is displayed, and carries out a display indicating a state under check (step S165). The data as an object of the privacy check is, for example, the data as shown in Fig. 33. Since the task activation URL is included therein, the destination of the data can be specified. The privacy engine 57 carries out a check on the basis of the setting indicating what data may be transmitted to the task activation URL and can not be transmitted. In a case where data, the transmission of which is not permitted, is included, the user may be requested to permit the transmission. A display indicating a state under check is, for example, the blinking of the privacy control icon.

When the data transmission is permitted by the privacy engine 57 or the user, the map application as the resident task carries out the map processing of the task [7] with the task ID and the task activation URL included in Fig. 33, and carries out a display indicating a state under readout of map information (step S167). The display indicating the state under readout of map information is, for example, a dotted line display from the privacy control icon through the icon of the map task to the network access icon in the communication space (c).

In response to the map processing of the task [7] in the map task, the communication engine 51 carries out a map acquisition processing of the task [7], and carries out a display indicating a state under communication (step S168). The communication engine 51 transmits a map acquisition request of the task [7] including information to specify the transaction, such as a transaction number, to the public service engine 31 of the service providing server 3.

The public service engine 31 of the service providing server 3 receives the map acquisition request of the task [7] from the communication engine 51 of the user terminal 5. Then, the maintenance information shown in Fig. 33 is acquired from the public service DB 33 on the basis of the information to specify the transaction, such as a transaction number. Then, information of a map within a suitable range is read out from the public service DB 33 on the basis of the one or plural maintenance store latitudes and longitudes included in the maintenance information (step S169). Then, the public service engine 31 transmits the maintenance map information of the task [7] to the user terminal 5 (step S171). The communication engine 51 of the user terminal 5 receives the maintenance map information of the task [7] and carries out a receiving display (step S173). For example, the network access icon of the communication space (c) is blinked.

In the application list space (f), the display as shown in Fig. 16 is carried out, and it is displayed that the maintenance map information of the task [7] has been acquired (step S175). Then, a maintenance map screen is displayed in the presentation and task space (e) (step S177).

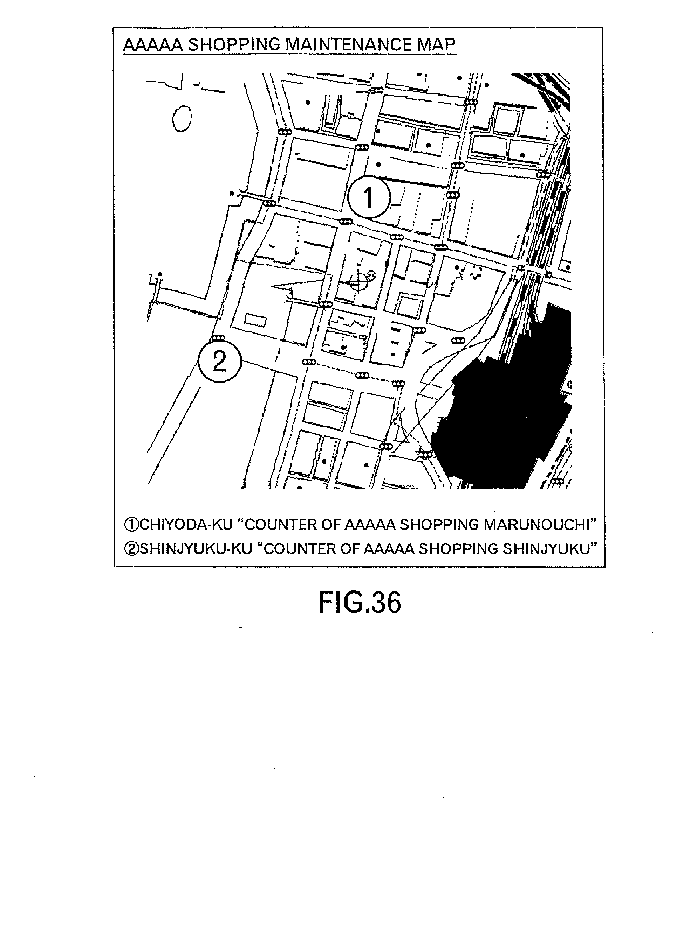

Fig. 36 shows an example of the maintenance map screen. In the example of Fig. 36, "1" is given to the store of Chiyoda-ku, and "2" is given to the store of Shinjyuku-ku. Such a screen is displayed so that the user can decide that he or she should request maintenance for which store. Incidentally, since both the map icon and the maintenance icon are displayed in the application list space (f), in the case where a return to the screen of Fig. 34 is desired, the maintenance icon has only to be clicked. Similarly, in the case where a return to the screen of Fig. 36 is desired again, the map icon has only to be clicked.

Here, although the map task (application) has been explained as an example of the resident task, as the resident task, for example, there is a calendar application. The calendar application is used in a case where information associated with a date and time is required. For example, in the case where a parameter of a maintenance operation execution day is included in the maintenance information, when the icon in the personal domain C corresponding to the maintenance information is clicked, the calendar application is activated, and a calendar is displayed in which a check is given to the maintenance operation execution day. Incidentally, since the information of the calendar is usually provided in a normal computer, without accessing the service providing server 3 as in the case of the map, the information of the calendar provided in the computer may be used to carry out a display in the presentation and task space (e).

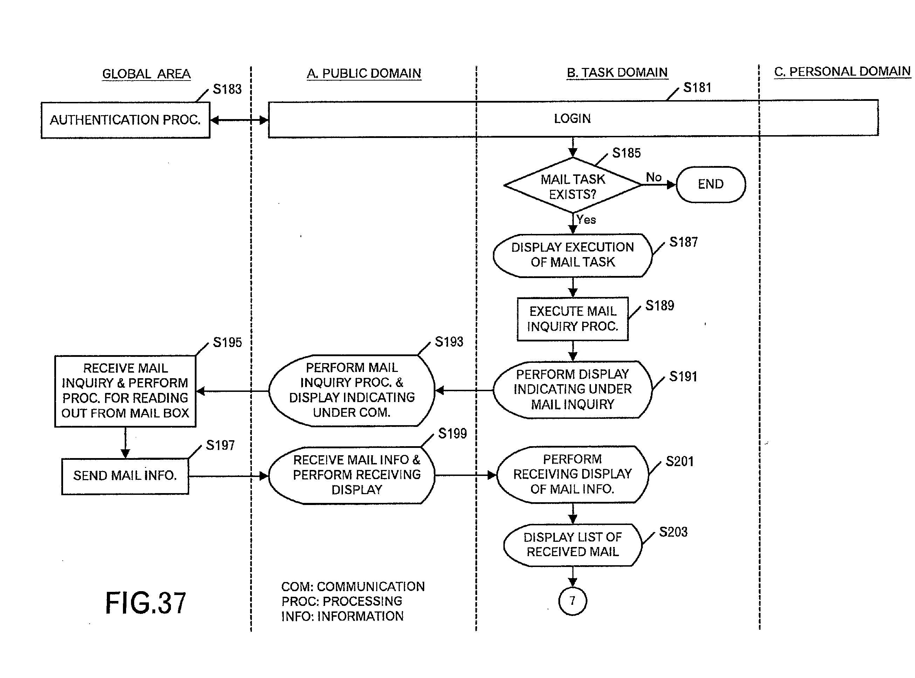

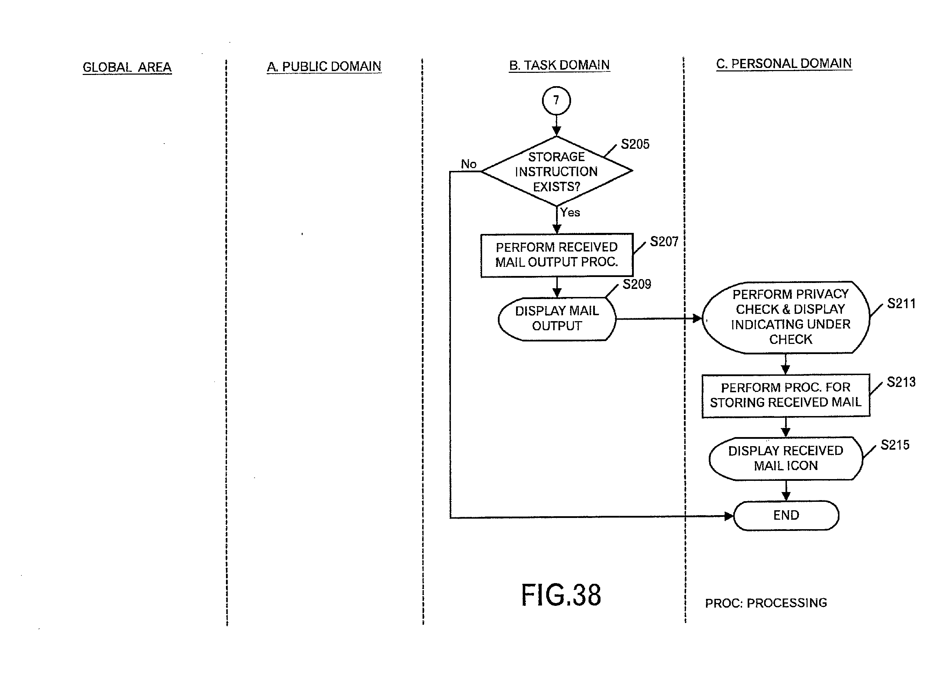

Besides, as another resident task, there is a mailer. An example of a processing flow of the mailer will be described by the user of Figs. 37 and 38. Here, it is assumed that the user terminal 5 first logs in the service providing server 3 (step S181). As for this login, the login may be performed by an explicit instruction of the user, or may be automatically performed when the user terminal 5 is connected to the network 1. At that time, such setting that a user ID and a password for login may be automatically transmitted to the service providing server 3 through the communication engine 51 has only to be carried out by the user to the privacy engine 57. In any event, the information of the user ID and the password is transmitted from the communication engine 51 to the service providing server 3, and an authentication processing is carried out (step S183). If there is a mail task (step S185: Yes route), an executing display of the mail task is carried out (step S187). That is, the icon of the mail task displayed in the application list space (f) is blinked. On the other hand, if there is no mail task, here, the processing is ended. That is, the processing is suspended until another instruction is given by the user.

Then, a mail inquiry processing is executed by the mail task (step S189). Besides, a display indicating that the mail inquiry processing and the communication are being performed is carried out (step S191). Here, a dotted line is displayed from the icon of the mail task to the network access icon of the public domain A so as to indicate the state under inquiry. Besides, the communication engine 51 carries out the mail inquiry processing to the public service engine 31 of the service providing server 3, and carries out the display indicating the state under communication (step S193). The display to blink the network access icon and the like is carried out.

The public service engine 31 of the service providing server 3 receives the mail inquiry from the user terminal 5, and carries out a processing for reading out a mail addressed to the user from a mail box included in the public service DB 33 (step S195). If no mail is received, a notice to the effect that there is no received mail is transmitted to the user terminal 5, and if some mail is received, information of the received mail is transmitted to the user terminal 5 (step S197).

The communication engine 51 receives the information of the received mail from the public service engine 31 of the service providing server 3, and carries out a display for a receiving processing (step S199). For example, the network access icon of the communication space (c) is blinked. Besides, with respect to the information of the received mail, a processing for a virus check may be carried out by the communication engine 51, and a virus check icon or the like may also be blinked in the communication space (c). Then, the information of the received mail is outputted to the mail task from the communication engine 51. When receiving the mail information, the mail task carries out a display for a receiving processing, and carries out a list display of received mail in the presentation and task space (e) (step S211). For example, at the step S199 and the step S201, the display as shown in Fig. 16 is carried out.

The processing proceeds to Fig. 38 through terminal 7. Here, on the mail list display, it is judged whether a storage instruction is given by the user (step S205). In a case where the storage instruction is not given, the processing is ended at this stage. On the other hand, in a case where the storage instruction of a specific mail is given, an output instruction of the received mail is executed (step S207). That is, profile data is constituted by header information of the mail, such as "From", "To", or "Subject", and a main text, and is outputted to the privacy engine 57. Besides, a mail output display is also carried out (step S209). For example, a dotted line is displayed from the icon of the mail task to the privacy control icon.

The privacy engine 57 carries out a privacy check on the profile data constituted by the information of the mail the reception of which is instructed. Besides, a display indicating a state under the privacy check is carried out (step S211). For example, the privacy control icon is blinked. Since there is no problem normally in that information of a mail is registered in the personal profile and presence DB 58, it passes the privacy check. Then, a processing for registering the information of the instructed and received mail into the personal profile and presence DB 58 is carried out (step S213), and a received mail icon is displayed in the personal domain C (step S215). For example, a display from the step S211 to the step S215 is such a display as in the step (3) to the step (5) of Fig. 25.

When the above processing is performed, among the received mails, a mail desired to be stored in the personal domain C is registered in the personal profile and presence DB 58 and the received mail icon can be displayed. Besides, in the case where reference is desired to be made later, the mail can be immediately specified and the content can be seen. Besides, for example, the privacy engine 57 can also carry out a check on unnecessary received mail for the user, such as an unsolicited mail. Then, a display indicating that the unsolicited mail is being checked is carried out. For example, an unsolicited mail check icon is blinked in the privacy space (i). If doing so, a processing for not automatically storing the unsolicited mail among received mails can be carried out in the personal domain C. Incidentally, with respect to the designation of the unsolicited mail, it can be specified at the time of mail reception in the presentation and task space (e), or information publicly specified from the Internet 1 can be used through the communication engine 51. Besides, data of the unsolicited mail can also be stored in the personal profile and presence DB 58.

Although the detailed processing of the public agent 53, the broker agent 56, and the user agent 59 has not been described, the public agent 53 prescribed by the service provider exchanges information with the broker agent 56, which mediates between the public agent and the user agent 59, in the public agent space (a). With respect to the exchange, there are some cases where it is automatically carried out by the broker agent 56 within a range permitted by the user agent 59, or there are some cases where the user inputs instructions as the substance of the broker agent 56. Even in the case where it is automatically carried out, if exchanges carried out between the public agent 53 and the broker agent are displayed, it becomes also possible for the user to start negotiating halfway. Besides, the user agent 59 makes a judgment as to whether or not information from the broker agent 56 should be registered in the personal profile and presence DB 58, or inquires of the user. Besides, there is a case where advice and notification as to the information registered in the personal profile and presence DB 58 is also presented to the user.

In the above, the embodiment of the invention has been described, the invention is not limited to this. As long as region definitions of display frames (windows) as shown in Fig. 1 and data movement between respective regions are visualized to enable the user to more easily grasp the network environment, and profile data intrinsic to the user including processing results of tasks and the like are visualized to be put at hand so that the human behavioral model and mental model can be fulfilled. The configuration of the user terminal 5 and the service providing server 3 as shown in Fig. 2 may not be necessarily adopted as it is. The configuration of a program for carrying out a display is arbitrary, and any configuration to realize the above functions may be adopted.

Besides, in a case where the dotted line display mentioned above many times is not any display of its full length at once but the dotted line is displayed from a start point to an end point while a display portion is moved little by little, the data movement, such as transmission or reception becomes easy to image. Besides, the data movement may be expressed by not the dotted line, but another expression mode. For example, an expression mode may be such that a semitransparent icon moves between regions.

Besides, the design and size of the icon is arbitrary, and it is appropriate to use the icon having content to facilitate imaging of a task. Although the example has been described in which the icon is blinked to indicate a state under processing or the like, in addition to the blinking, the size may be enlarged or a highlight display may be carried out. Besides, the color may be changed.

Further, in the case where electronic commerce or cooperation with an electronic government is carried out, there are some cases where an IC card reader is connected to the user terminal 5, or authentication means of a biometrics system such as a fingerprint is provided. In this case, in the privacy space (i) , an icon corresponding thereto is disposed, or a corresponding program is prepared to cooperate.

Further, although it is premised that data used in the above described processing is described in XML, a configuration may be such that it is described in another language.

Besides, all the spaces shown in Fig. 1 are not necessarily defined. For example, there are some cases where no definition is given to all the vertical regions concerning the agents. Besides, in some case, the public menu space (b) and the privacy space (i) are not provided.

Although the present invention has been described with respect to a specific preferred embodiment thereof, various change and modifications may be suggested to one skilled in the art, and it is intended that the present invention encompass such changes and modifications as fall within the scope of the appended claims.

## Claims

1. A method for performing a display on a display screen of a computer, said method comprising the steps of:
displaying at least either of information concerning a service provided by another computer connected via a network and information concerning a state of communication with said another computer in a first display frame on said display screen of said computer;
displaying at least processing content of a task associated with said service provided by said another computer in a second display frame on said display screen of said computer; and
displaying at least an icon for expressing information intrinsic to a user in a third display frame on said display screen of said computer, wherein said information intrinsic to the user includes a processing result of said task associated with said service provided by said another computer.

2. The method as set forth in claim 1, further comprising a step of performing a processing associated with security in said communication with said another computer while displaying a state under communication with said another computer as said information concerning said state of said communication.

3. The method as set forth in claim 1 or 2, further comprising a step of displaying an icon for expressing said task associated with said service provided by said another computer in said second display frame.

4. The method as set forth in claim 3, further comprising the steps of:
displaying data associated with said task in said second display frame after a display expressing a passage through said icon for expressing said task is carried out in a case where said data associated with said task is received from said another computer; and
performing a display expressing a transmission through said icon for expressing said task in a case where said data associated with said task is transmitted to said another computer.

5. The method as set forth in claim 3 or 4, wherein said icon for expressing said task associated with said service provided by said another computer is received from said another computer as data associated with said task.

6. The method as set forth in any preceding claim, further comprising a step of performing a processing associated with at least either of privacy confirmation with respect to said information intrinsic to the user, and policy confirmation for the user or between the user and a third party when said information intrinsic to the user is used or registered.

7. The method as set forth in claim 6, further comprising a step of displaying an icon for expressing a function for performing said processing associated with at least either of said privacy confirmation and said policy confirmation.

8. The method as set forth in claim 7, further comprising a step of performing a display expressing a passage via said icon for expressing said function for performing said processing associated with at least either of said privacy confirmation and said policy confirmation when a processing result of said task is registered.

9. The method as set forth in claim 7 or 8, further comprising the steps of:
when a processing result of said task is registered,
performing a display expressing a passage via said icon for expressing said function for performing said processing associated with at least either of said privacy confirmation and said policy confirmation; and
displaying an icon, which corresponds to said processing result of said task and is received from another computer.

10. The method as set forth in any preceding claim, further comprising the steps of:
storing a processing result of said task associated with said service provided by said another computer in a storage device correspondingly to an icon for expressing said processing result of said task; and
reading out said processing result of said task, which is stored in said storage device, in response to a selection instruction of said icon for expressing said processing result of said task, and performing a processing for activating a task associated with said processing result of said task.

11. The method as set forth in claim 10, wherein, in a case where said processing result of said task includes data associated with a resident task, said resident task is at least said task associated with said processing result of said task.

12. The method as set forth in claim 11, wherein said data associated with said resident task is at least either of data associated with a map, data associated with a date, and data associated with mail.

13. The method as set forth in claim 10, 11 or 12, further comprising a step of performing a display expressing that an output is made via an icon for expressing a function for performing a processing associated with at least either of privacy confirmation with respect to said information intrinsic to the user and policy confirmation for the user or between the user and a third party, in response to said selection instruction of said icon for expressing said processing result of said task.

14. The method as set forth in claim 13, wherein said step of performing a processing for activating a task associated with said processing result of said task comprises a step of activating said function for performing said processing associated with at least either of said privacy confirmation and said policy confirmation, and wherein said activated function performs a processing for data to be outputted to said task associated with said processing result of said task.

15. The method as set forth in any preceding claim, further comprising a step of performing a display expressing that a request is made via a portion where said information concerning said state of said communication is displayed in a case where said information concerning said service provided by said another computer and said information concerning said state of said communication are displayed, and a specific service included in said information concerning said service is selected.

16. The method as set forth in any preceding claim, wherein said first display frame is provided in an upper part of a window on said display screen or in an upper part of said display screen, said second display frame is provided in a middle part of said window on said display screen or in a middle part of said display screen, and said third display frame is provided in a lower part of said window on said display screen or in a lower part of said display screen.

17. An information processing method, comprising the steps of:
transmitting information concerning a provided service to a user terminal in response to an access from said user terminal;
transmitting information for task execution and information for an icon for expressing the task to said user terminal in response to a task activation request associated with said provided service from said user terminal; and
transmitting information concerning a processing result of said task and information of an icon for expressing a processing result of said task to said user terminal after processing completion of said task in said user terminal.

18. A method for performing a display on a display screen of a computer, said method comprising the steps of:
displaying at least processing content of a task associated with a service provided by another computer connected via a network in a first display frame on said display screen of said computer; and
displaying at least an icon for expressing information intrinsic to a user in a second display frame on said display screen of said computer, wherein said information intrinsic to the user includes a processing result of said task associated with said service provided by said another computer.

19. An information processing apparatus, comprising:
means for displaying at least either of information concerning a service provided by another computer connected via a network and information concerning a state of communication with said another computer in a first display frame on said display screen of said computer;
means for displaying at least processing content of a task associated with said service provided by said another computer in a second display frame on said display screen of said computer; and
means for displaying at least an icon for expressing information intrinsic to a user in a third display frame on said display screen of said computer, wherein said information intrinsic to the user includes a processing result of said task associated with said service provided by said another computer.

20. The information processing apparatus as set forth in claim 19, further comprising means for performing a processing associated with security in said communication with said another computer while displaying a state under communication with said another computer as said information concerning said state of said communication.

21. The information processing apparatus as set forth in claim 19 or 20, further comprising means for performing a display expressing that a request is made via a portion where said information concerning said state of said communication is displayed in a case where said information concerning said service provided by said another computer and said information concerning said state of said communication are displayed, and a specific service included in said information concerning said service is selected.

22. The information processing apparatus as set forth in claim 19, 20 or 21, wherein said first display frame is provided in an upper part of a window on said display screen or in an upper part of said display screen, said second display frame is provided in a middle part of said window on said display screen or in a middle part of said display screen, and said third display frame is provided in a lower part of said window on said display screen or in a lower part of said display screen.

23. The information processing apparatus as set forth in any one of claims 19 to 22, further comprising means for displaying an icon for expressing said task associated with said service provided by said another computer in said second display frame.

24. The information processing apparatus as set forth in claim 23, wherein said icon for expressing said task associated with said service provided by said another computer is received from said another computer as data associated with said task.

25. The information processing apparatus as set forth in claim 23 or 24, further comprising:
means for displaying data associated with said task in said second display frame after a display expressing a passage through said icon for expressing said task is carried out in a case where said data associated with said task is received from said another computer; and
means for performing a display expressing a transmission through said icon for expressing said task in a case where said data associated with said task is transmitted to said another computer.

26. The information processing apparatus as set forth in any one of claims 19 to 25, further comprising means for performing a processing associated with at least either of privacy confirmation with respect to said information intrinsic to the user, and policy confirmation for the user or between the user and a third party when said information intrinsic to the user is used or registered.

27. The information processing apparatus as set forth in claim 26, further comprising means for displaying an icon for expressing a function for performing said processing associated with at least either of said privacy confirmation and said policy confirmation.

28. The information processing apparatus as set forth in claim 27, further comprising means for performing a display expressing a passage via said icon for expressing said function for performing said processing associated with at least either of said privacy confirmation and said policy confirmation when a processing result of said task is registered.

29. The information processing apparatus as set forth in claim 27 or 28, further comprising:
means for performing a display expressing a passage via said icon for expressing said function for performing said processing associated with at least either of said privacy confirmation and said policy confirmation when a processing result of said task is registered; and
means for displaying an icon, which corresponds to said processing result of said task and is received from another computer.

30. The information processing apparatus as set forth in any one of claims 19 to 29, further comprising:
means for storing a processing result of said task associated with said service provided by said another computer in a storage device correspondingly to an icon for expressing said processing result of said task; and
means for reading out said processing result of said task, which is stored in said storage device, in response to a selection instruction of said icon for expressing said processing result of said task, and performing a processing for activating a task associated with said processing result of said task.

31. The information processing apparatus as set forth in claim 30, wherein, in a case where said processing result of said task includes data associated with a resident task, said resident task is at least said task associated with said processing result of said task.

32. The information processing apparatus as set forth in claim 31, wherein said data associated with said resident task is at least either of data associated with a map, data associated with a date, and data associated with mail.

33. The information processing apparatus as set forth in claim 30, 31 or 32, further comprising means for performing a display expressing that an output is made via an icon for expressing a function for performing a processing associated with at least either of privacy confirmation with respect to said information intrinsic to the user and policy confirmation for the user or between the user and a third party, in response to said selection instruction of said icon for expressing said processing result of said task.

34. The information processing apparatus as set forth in claim 33, wherein said means for performing a processing for activating a task associated with said processing result of said task comprises means for activating said function for performing said processing associated with at least either of said privacy confirmation and said policy confirmation, and wherein said activated function performs a processing for data to be outputted to said task associated with said processing result of said task.

35. An information processing apparatus, comprising:
means for transmitting information concerning a provided service to a user terminal in response to an access from said user terminal;
means for transmitting information for task execution and information for an icon for expressing the task to said user terminal in response to a task activation request associated with said provided service from said user terminal; and
means for transmitting information concerning a processing result of said task and information of an icon for expressing a processing result of said task to said user terminal after processing completion of said task in said user terminal.

36. An information processing apparatus, comprising:
means for displaying at least processing content of a task associated with a service provided by another computer connected via a network in a first display frame on said display screen of said computer; and
means for displaying at least an icon for expressing information intrinsic to a user in a second display frame on said display screen of said computer, wherein said information intrinsic to the user includes a processing result of said task associated with said service provided by said another computer.

37. A computer program which, when run on a computer, causes the computer to become apparatus as claimed in any one of claims 19 to 36.

38. A computer program which, when run on a computer, causes the computer to carry out a method as claimed in any one of claims 1 to 18.

39. A computer program as claimed in claim 37 or 38, carried on a carrier medium.

40. A computer program as claimed in claim 39, wherein the carrier medium is a transmission medium.

41. A computer program as claimed in claim 39, wherein the carrier medium is a storage medium.
